# EUROPEAN PATENT SPECIFICATION

(11) **EP 3 592 068 B1**
(45) Date of publication and mention of the grant of the patent: **20.04.2022**
(21) Application number: 18770780.7
(22) Date of filing: 08.03.2018
(51) Int. Cl.: H04W 72/04

(54) **COMMUNICATION METHOD AND NETWORK DEVICE AND TERMINAL DEVICE THEREOF**
KOMMUNIKATIONSVERFAHREN UND NETZWERKVORRICHTUNG UND ENDGERÄTEVORRICHTUNG DAFÜR
PROCÉDÉ DE COMMUNICATION, ET DISPOSITIF DE RÉSEAU ET DISPOSITIF TERMINAL ASSOCIÉS

(30) Priority: 24.03.2017 CN 201710184894; 05.05.2017 CN 201710312830; 10.08.2017 CN 201710682683
(43) Date of publication of application: 08.01.2020
(73) Proprietor: Huawei Technologies Co., Ltd., Longgang District Shenzhen, Guangdong 518129 (CN)
(72) Inventor: DONG, Pengpeng, Shenzhen Guangdong 518129 (CN); PENG, Jinlin, Shenzhen Guangdong 518129 (CN); ZHANG, Peng, Shenzhen Guangdong 518129 (CN); DU, Bai, Shenzhen Guangdong 518129 (CN)
(74) Representative: Pfenning, Meinig & Partner mbB
(86) International application number: PCT/CN2018/078408
(87) International publication number: WO 2018/171436

(56) References cited:
- WO-A1-2016/163505
- CN-A- 105 472 701
- CN-A- 105 517 168
- US-A1- 2004 223 478
- US-A1- 2016 285 595
- HUAWEI HISILICON: "SC-MTCH transmission in NB-IoT", 3GPP DRAFT; R1-1611152, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051175133, Retrieved from the Internet: URL:http://www.3gpp.org/ftp/Meetings_3GPP_ SYNC/RAN1/Docs/ [retrieved on 2016-11-13]

## Description

### TECHNICAL FIELD

This application relates to the communications field, and more specifically, to a communication method, and a network device and a terminal device thereof.

### BACKGROUND

A mobile communications technology has profoundly changed people's lives, but people have never stopped pursuing a mobile communications technology with higher performance. To cope with an explosive growth of mobile data traffic, massive mobile communications device connections, and various constantly emerging new services and application scenarios in the future, a fifth generation (the fifth generation, 5G) mobile communications system emerges accordingly. The 5G mobile communications system needs to support an enhanced mobile broadband (enhanced mobile broadband, eMBB) service, an ultra-reliable and low latency communications (ultra reliable and low latency communications, URLLC) service, and a massive machine type communications (massive machine type communications, mMTC) service.

Typical eMBB services are ultra-high-definition videos, augmented reality (augmented reality, AR), virtual reality (virtual reality, VR), and the like. These services mainly feature a large data transmission volume and a very high transmission rate. Typical URLLC services are tactile interactive applications such as wireless control in an industrial manufacturing or production process, motion control of an unmanned vehicle and an unmanned aircraft, and a remote surgery. These services mainly feature ultra-high reliability, a low latency, a relatively small data transmission volume, and burstiness. Typical mMTC services are smart grid power distribution automation, smart cities, and the like. Main characteristics are a huge quantity of networking devices, a relatively small data transmission volume, and data insensitivity to a transmission latency. mMTC terminals need to meet requirements of low costs and a very long standby time.

The URLLC service has an excessively high requirement for a latency. When reliability is not considered, a transmission latency within 0.5 milliseconds (millisecond, ms) is required; when reliability reaches 99.999%, a transmission latency within 1 ms is required.

Therefore, requirements of high reliability and a low latency of the URLLC service affects a manner of allocating a resource to the URLLC service by a network device. Generally, to meet the requirement of high reliability of the URLLC service, data packets of the URLLC service need to be transmitted for a plurality of times to meet the reliability requirement; and to meet the low-latency requirement at the same time, the network device needs to allocate a relatively large quantity of frequency-domain resources to the URLLC service in a communication process of the URLLC service.

Therefore, a communication method is urgently needed so that resource utilization can be improved while service requirements for high reliability and a low latency are met.

In US 2016/285595 A1 apparatus and methods are provided to enhance HARQ mechanism. The UE repeatedly transmits a data block with a first repetition number and retransmits the data block with a second repetition number. In one embodiment, the first and the second repetition number value are explicitly included in an uplink grant message. In another embodiment, the UE obtains a repetition number value by looking up a repetition number table indexed by the repetition number indicator, which is included in an uplink grant message for the first repetition number and included in a HARQ message for the second repetition number. In yet another embodiment, the UE determines a coverage enhancement degree value, a data block size value and an available transport resource block size. The UE obtains a repetition number by table-look-up based on the coverage-enhancement degree value, the data block size, and the transport resource block size.

HUAWEI HISILICON, "SC-MTCH transmission in NB-IoT", vol. RAN WG1, no. Reno, USA; 20161114 - 20161118, (20161113), 3GPP DRAFT; R1-1611152; analyses methods which provide coverage enhancement for single-cell point-to-multipoint, SC-PTM transmissions, in which, based on link level performance evaluation and power consumption analysis, multi-stage repetition is proposed to be supported in NarrowBand-Internet of things SC-PTM transmissions, wherein the multi-stage transmission includes sending multiple stage repetition, wherein each repetition comprises multiple repetitions of a plurality of transport blocks such that each transport block is sent X times, in contrast to single stage repetition, wherein each transport block is sent x times before a next transport block is transmitted.

### SUMMARY

This application provides communication methods, a network device, a terminal device, a computer-readable storage medium and a computer program product, to improve resource utilization.

According to a first aspect, a communication method is provided, including: sending downlink control information, where the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and transmitting the first transport block for K times based on the downlink control information.

In the method provided in this embodiment of this application, the sizes of the frequency-domain resources occupied by the at least two times of transmission during the K times of transmission are different, or the sizes of the time-domain resources occupied by the at least two times of transmission during the K times of transmission are different. Therefore, resource utilization can be improved by properly allocating resources for the K times of transmission.

With reference to the first aspect, in a first possible implementation of the first aspect, the method further includes: sending resource indication information, where the resource indication information is used to indicate at least one of the following: a frequency-domain resource occupied by the K times of transmission; and a time-domain resource occupied by the K times of transmission.

That is, the indication information can be sent to explicitly notify a terminal device of a time-frequency resource occupied by the K times of transmission.

With reference to the first aspect and the foregoing implementation, in a second possible implementation of the first aspect, the downlink control information is further used to indicate at least one of the following: a frequency-domain resource occupied by the K times of transmission; and a time-domain resource occupied by the K times of transmission.

That is, the downlink control information carried during the first transmission can be used to notify the terminal device of the time-frequency resource occupied by the K times of transmission.

With reference to the first aspect and the foregoing implementation, in a third possible implementation of the first aspect, at least one of the following is a predefined resource: the frequency-domain resource occupied by the K times of transmission; and the time-domain resource occupied by the K times of transmission.

It should be understood that performing transmission for K times by using a predefined time-frequency resource includes: determining, by a network device according to a predefined rule, the time-frequency resource used in the K times of transmission, and sending information; and also includes: determining, by the terminal device according to the predefined rule, the time-frequency resource used in the K times of transmission, and receiving information on the determined time-frequency resource.

With reference to the first aspect and the foregoing implementation, in a fourth possible implementation of the first aspect, a time-frequency resource occupied by last M times of transmission of the K times of transmission is greater than a time-frequency resource occupied by first transmission, 1 ≤ M < K, and M is an integer.

Specifically, a value of M may be carried in the downlink control information, or may be carried in higher layer signaling, for example, a radio resource control (radio resource control, RRC) message.

Therefore, a quantity of time-frequency resources for the last M times of transmission is increased, because an occurrence probability of the last M times of transmission is quite low, and allocating a relatively large quantity of time-frequency resources at last can ensure reliability within a given latency and can also ensure relatively high spectral efficiency.

According to a second aspect, a communication method is provided, including: receiving downlink control information, where the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and receiving data, transmitted in the K times of transmission, of the first transport block based on the downlink control information.

With reference to the second aspect, in a first possible implementation of the second aspect, the method further includes: determining, based on the downlink control information, a time-frequency resource occupied by the K times of transmission.

With reference to the second aspect and the foregoing implementation, in a second possible implementation of the second aspect, the method further includes: receiving resource indication information, and determining, based on the resource indication information, a time-frequency resource occupied by the K times of transmission.

With reference to the second aspect and the foregoing implementation, in a third possible implementation of the second aspect, the time-frequency resource occupied by the K times of transmission is a predefined resource.

With reference to the second aspect and the foregoing implementation, in a fourth possible implementation of the second aspect, a time-frequency resource of last M times of transmission of the K times of transmission is greater than a time-frequency resource of the first transmission, 1 ≤ M < K, and M is an integer.

According to a third aspect, a network device is provided, configured to perform the method according to any one of the first aspect or the possible implementations of the first aspect. Specifically, the network device includes units configured to perform the method according to any one of the first aspect or the possible implementations of the first aspect.

According to a fourth aspect, a terminal device is provided, configured to perform the method according to any one of the second aspect or the possible implementations of the second aspect. Specifically, the terminal device includes units configured to perform the method according to any one of the second aspect or the possible implementations of the second aspect.

According to a fifth aspect, a computer readable storage medium is provided. The computer readable storage medium stores an instruction. When the instruction is run on a computer, the computer is enabled to perform the methods according to the foregoing aspects.

According to a sixth aspect, a computer program product including an instruction is provided. When the computer program product is run on a computer, the computer is enabled to perform the methods according to the foregoing aspects.

### DESCRIPTION OF DRAWINGS

FIG. 1 is a schematic architectural diagram of a mobile communications system applied to an embodiment of this application;
FIG. 2 is a schematic diagram of resource preemption according to an embodiment of this application;
FIG. 3 is a schematic flowchart of a method according to an embodiment of this application;
FIG. 4 is a schematic diagram of a method according to an embodiment of this application;
FIG. 5 is a schematic diagram of a method according to another embodiment of this application;
FIG. 6 is a schematic diagram of a method according to an embodiment of this application;
FIG. 7 is a schematic diagram of a method according to another embodiment of this application;
FIG. 8 is a schematic diagram of a method according to an embodiment of this application;
FIG. 9 is a schematic diagram of a method according to an embodiment of this application;
FIG. 10 is a schematic diagram of a method according to an embodiment of this application;
FIG. 11 is a schematic diagram of a method according to an embodiment of this application;
FIG. 12 is a schematic diagram of a method according to an embodiment of this application;
FIG. 13 is a schematic diagram of a method according to an embodiment of this application;
FIG. 14 is a schematic diagram of a method according to an embodiment of this application;
FIG. 15 is a schematic diagram of a method according to an embodiment of this application;
FIG. 16 is a schematic diagram of a method according to an embodiment of this application;
FIG. 17 is a schematic diagram of a method according to another embodiment of this application;
FIG. 18 is a schematic diagram of a method according to an embodiment of this application;
FIG. 19 is a schematic diagram of a method according to an embodiment of this application;
FIG. 20 is a schematic diagram of a method according to an embodiment of this application;
FIG. 21 is a schematic diagram of a method according to an embodiment of this application;
FIG. 22 is a schematic flowchart of a method according to an embodiment of this application;
FIG. 23 is a schematic diagram of a method according to an embodiment of this application;
FIG. 24 is a schematic diagram of a method according to an embodiment of this application;
FIG. 25 is a schematic diagram of a method according to an embodiment of this application;
FIG. 26 is a schematic diagram of a method according to an embodiment of this application;
FIG. 27 is a schematic diagram of a method according to an embodiment of this application;
FIG. 28 is a schematic diagram of a method according to an embodiment of this application;
FIG. 29 is a schematic diagram of a method according to an embodiment of this application;
FIG. 30 is a schematic diagram of a method according to an embodiment of this application;
FIG. 31 is a schematic diagram of a method according to an embodiment of this application;
FIG. 32 is a schematic structural block diagram of a network device 3200 according to an embodiment of the present invention;
FIG. 33 is a schematic structural block diagram of a terminal device 3300 according to an embodiment of the present invention;
FIG. 34 is a schematic structural block diagram of a network device 3400 according to an embodiment of the present invention;
FIG. 35 is a schematic structural block diagram of a terminal device 3500 according to an embodiment of the present invention;
FIG. 36 is a schematic structural block diagram of an apparatus according to an embodiment of the present invention; and
FIG. 37 is a schematic structural block diagram of an apparatus according to an embodiment of the present invention.

### DESCRIPTION OF EMBODIMENTS

The following describes technical solutions of this application with reference to accompanying drawings.

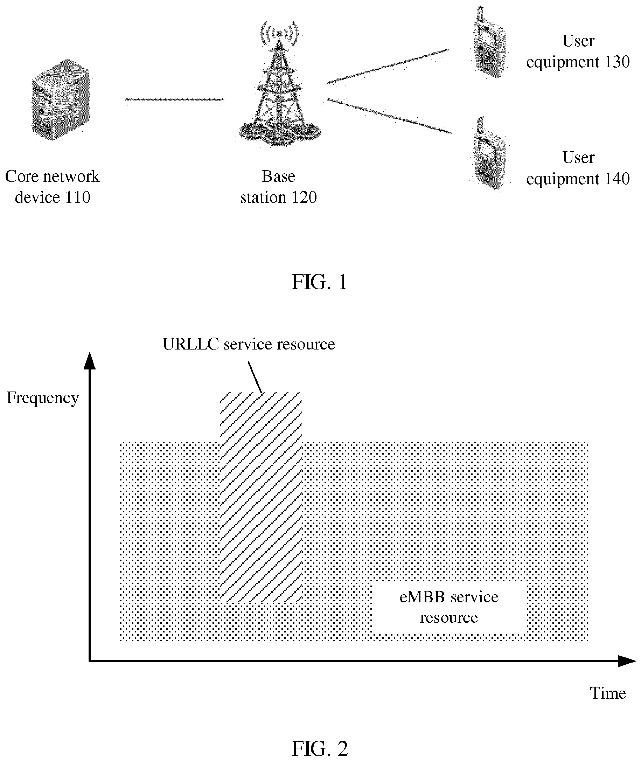

FIG. 1 is a schematic architectural diagram of a mobile communications system applied to an embodiment of this application. As shown in FIG. 1, the mobile communications system includes a core network device (for example, a core network device 110 in FIG. 1), a radio access network device (for example, a base station 120 in FIG. 1), and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different independent physical devices, or a function of the core network device and a logical function of the radio access network device may be integrated on one physical device, or some functions of the core network device and some functions of the radio access network device may be integrated on one physical device. The terminal device may be in a fixed location, or may be mobile. FIG. 1 is merely a schematic diagram. The communications system may further include other network devices. For example, the communications system may further include a wireless relay device and a wireless backhaul device, which are not drawn in FIG. 1. Quantities of core network devices, radio access network devices, and terminal devices included in the mobile communications system are not limited in this embodiment of this application.

The radio access network device is an access device that is in the mobile communications system and to which the terminal device is connected in a wireless manner. The radio access network device may be a base station NodeB, an evolved base station eNodeB, a base station in a 5G mobile communications system, a base station in a future mobile communications system, an access node in a Wi-Fi system, or the like. A specific technology and a specific device form used by the radio access network device are not limited in this embodiment of this application.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (pad), a computer with a radio sending/receiving function, a virtual reality (virtual reality, VR) terminal device, an augmented reality (augmented reality, AR) terminal device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device may be deployed on land, including an indoor or outdoor scenario and a handheld or in-vehicle scenario; or may be deployed on water; or may be deployed on an airplane, a balloon, or a satellite in the air. Application scenarios of the radio access network device and the terminal device are not limited in this embodiment of this application.

This embodiment of this application is applicable to downlink signal transmission, or is applicable to uplink signal transmission, or is applicable to device-to-device (device to device, D2D) signal transmission. For the downlink signal transmission, a sending device is a radio access network device, and a corresponding receiving device is a terminal device. For the uplink signal transmission, a sending device is a terminal device, and a corresponding receiving device is a radio access network device. For the D2D signal transmission, a sending device is a terminal device, and a corresponding receiving device is also a terminal device. A signal transmission direction is not limited in this embodiment of this application.

Communication between the radio access network device and the terminal device and between the terminal devices may be performed by using a licensed spectrum (licensed spectrum), or communication may be performed by using an unlicensed spectrum (unlicensed spectrum), or communication may be performed by using both a licensed spectrum and an unlicensed spectrum. Communication between the radio access network device and the terminal device and between the terminal devices may be performed by using a spectrum below 6G, or communication may be performed by using a spectrum above 6G, or communication may be performed by using both a spectrum below 6G and a spectrum above 6G. A spectrum resource used between the radio access network device and the terminal device is not limited in this embodiment of this application.

A data packet of a URLLC service is generated abruptly and randomly. It is possible that no data packet is generated in a quite long period of time. It is also possible that a plurality of data packets are generated within a quite short time. In most cases, a data packet of the URLLC service is a small packet, for example, including 50 bytes. A feature of the data packet of the URLLC service affects a resource assignment manner of a communications system. Herein, resources include but are not limited to a time-domain symbol, a frequency-domain resource, a time-frequency resource, a codeword resource, a beam resource, and the like. System resources are usually allocated by a base station. The following uses a base station as an example for description. If the base station allocates resources to the URLLC service in a manner of reserving resources, system resources are wasted when there is no URLLC service. In addition, a low-latency feature of the URLLC service requires that data packet transmission be completed within an excessively short time. Therefore, the base station needs to reserve sufficiently large bandwidth for the URLLC service, causing a severe decrease in system resource utilization.

An eMBB service has a relatively large data volume and a relatively high transmission rate. Therefore, a time scheduling unit with relatively long duration is usually used for data transmission, to improve transmission efficiency. For example, a slot corresponding to a subcarrier spacing of 15 kHz is used, and corresponding duration is 0.5 ms. Because of data burstiness of the URLLC service, to improve the system resource utilization, the base station usually does not reserve resources for downlink data transmission of the URLLC service, but allocates resources to the URLLC service by preempting (preemption) resources of the eMBB service. As shown in FIG. 2, herein, preemption means that the base station selects some or all of allocated time-frequency resources that are used to transmit eMBB service data, to transmit URLLC service data, and the base station does not send eMBB service data on a time-frequency resource used to transmit URLLC service data.

According to a method provided in the embodiments of this application, resource utilization can be improved while service requirements for high reliability and a low latency are met.

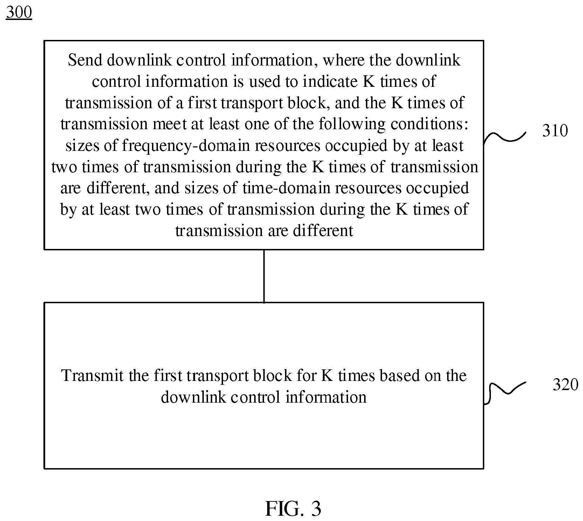

FIG. 3 is a schematic flowchart of a method according to an embodiment of this application. The method is performed by a network device, namely, the radio access network device shown in FIG. 1. As shown in FIG. 3, the method 300 includes the following steps.

Step 310: Send downlink control information, where the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different.

Step 320: Transmit the first transport block for K times based on the downlink control information.

Specifically, the downlink control information (downlink control information, DCI) is used to schedule K times of transmission of a same transport block (transport block, TB), and the downlink control information is carried in the first transmission of the K times of transmission. Further, each of the K times of transmission includes data information of the first transport block. The data information of the first transport block in each transmission may have a respective redundancy version (redundancy version, RV). RVs of data information of the first transport block in the K times of transmission may be the same or different. This is not limited in this application. It can be understood that the DCI may be alternatively used to schedule K times of transmission of a plurality of TBs. For example, in a multi-flow transmission scenario in multiple-input multiple-output (multiple-input multiple-output, MIMO), a plurality of TBs are simultaneously transmitted in one transmission. In this case, the first transport block is one of the plurality of TBs. In this application, "plurality" means at least two. In this application, that one TB is transmitted at a time is used as an example, but a quantity of TBs transmitted at a time is not limited.

The DCI is carried on a first control channel. The first control channel may be a physical downlink control channel (physical downlink control channel, PDCCH) or another downlink channel used to carry physical layer control information. This is not limited in this application.

It should be understood that the K times of transmission (transmission) mentioned in step 310 may also be referred to as K repetitions (repetition). The first transport block described in the embodiment of FIG. 3 may be any transport block scheduled by using the downlink control information. This is not limited in this application.

A time-domain resource occupied by each of the K times of transmission is one or more time units. The time unit may be one or more orthogonal frequency division multiplexing (orthogonal frequency division multiplexing, OFDM) symbols, may be one or more slots (slot), or may be one or more mini-slots (mini-slot). One mini-slot includes at least two OFDM symbols. This is not limited in this application. A frequency-domain resource occupied by each of the K times of transmission is one or more frequency-domain units. The frequency-domain unit may be one or more resource blocks (resource block, RB), or may be one or more subcarriers (subcarrier). This is not limited in this application.

In step 310, the sizes of the frequency-domain resources occupied by the at least two times of transmission during the K times of transmission are different, or the sizes of the time-domain resources occupied by the at least two times of transmission during the K times of transmission are different, or both the sizes of the time-domain resources occupied by the at least two times of transmission during the K times of transmission and the sizes of the frequency-domain resources occupied by the at least two times of transmission during the K times of transmission are different.

Correspondingly, for a terminal device receiving downlink data, the following steps need to be performed: receiving downlink control information, where the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and receiving data, transmitted in the K times of transmission, of the first transport block based on the downlink control information.

The terminal device may further determine, based on the downlink control information, a time-frequency resource occupied by the K times of transmission.

That is, the network device schedules the K times of transmission of the first transport block by using downlink scheduling information, and sends the first transport block to the terminal device; and after determining the time-frequency resource occupied by the K times of transmission, the terminal device receives, on the time-frequency resource occupied by the K times of transmission, information carried in the K times of transmission, that is, receives the data information of the first transport block.

The following describes schematic diagrams of methods in this application with reference to specific embodiments.

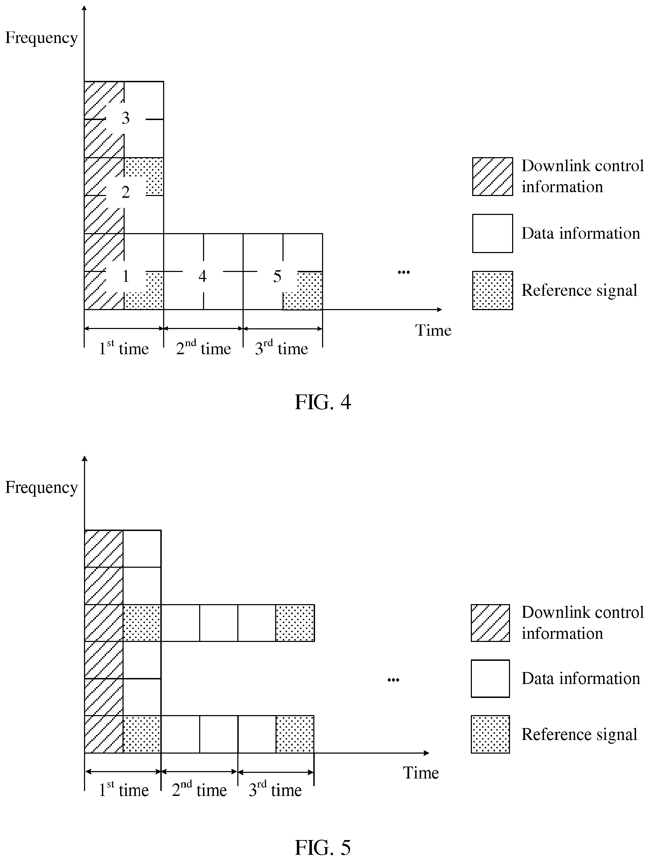

FIG. 4 is a schematic diagram of a method according to an embodiment of this application. FIG. 4 shows three times of transmission of a first transport block. The first transmission occupies two time units in time domain, and the first transmission occupies six frequency-domain units in frequency domain. For example, the six frequency-domain units may be six RBs. The first transmission carries downlink control information and data information of the first transport block. The second transmission and the third transmission each occupy two time units in time domain, and the second transmission and the third transmission each occupy two frequency-domain units in frequency domain. The second transmission and the third transmission each carry data information of the first transport block. The first transmission and the third transmission further carry reference signals (reference signal, RS). Therefore, in these three times of transmission, a size of a frequency-domain resource occupied by the first transmission is different from that occupied by the second transmission, and the size of the frequency-domain resource occupied by the first transmission is also different from that occupied by the third transmission.

The first transmission, the second transmission, and the third transmission are a plurality of repetitions of a same transport block, and as an equivalent code rate of the transport block gradually decreases, a block error rate of the transport block gradually decreases, and reliability is gradually improved. Therefore, compared with the first transmission, the second transmission and the third transmission can achieve a required target block error rate by occupying fewer frequency-domain resources.

It should be understood that for transmission of the first transport block that is described in the embodiment of FIG. 4, one transmission occupies two frequency-domain units in frequency domain, and occupies two time units in time domain. In this case, FIG. 4 shows a total of five times of transmission.

FIG. 5 is a schematic diagram of a method according to another embodiment of this application. FIG. 5 shows three times of transmission of a first transport block. The first transmission occupies two time units in time domain, and the first transmission occupies six frequency-domain units in frequency domain. The first transmission carries downlink control information and data information of the first transport block. The second transmission and the third transmission each occupy two time units in time domain. The second transmission and the third transmission each carry data information of the first transport block. The third transmission further carries a reference signal. A difference from the embodiment of FIG. 4 is that two frequency-domain units occupied in frequency domain during the second transmission and the third transmission are discrete, that is, frequency-domain units not used to carry information of the first transport block are located between the two frequency-domain units. This can enhance a frequency-domain diversity effect of the second transmission and the third transmission, and further improve transmission performance. Therefore, in these three times of transmission, a size of a frequency-domain resource occupied by the first transmission is different from that occupied by the second transmission, and the size of the frequency-domain resource occupied by the first transmission is also different from that occupied by the third transmission.

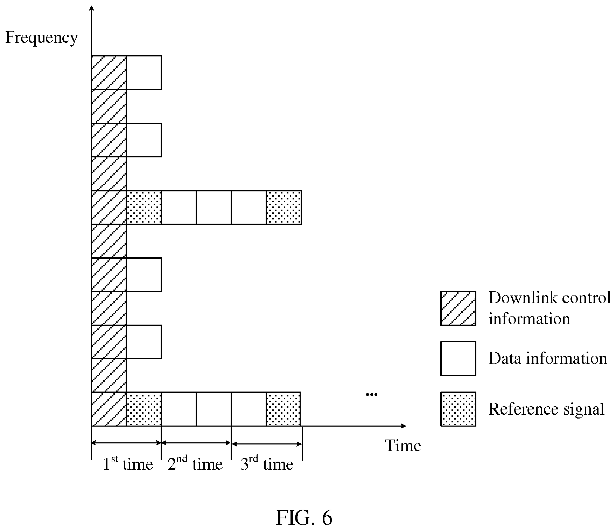

FIG. 6 is a schematic diagram of a method according to an embodiment of this application. FIG. 6 shows three times of transmission of a first transport block. The first transmission occupies two time units in time domain, and occupies six frequency-domain units in frequency domain, where the six frequency-domain units are discrete. The first transmission carries downlink control information and data information of the first transport block. The second transmission and the third transmission each occupy two time units in time domain, and occupy two frequency-domain units in frequency domain. As shown in FIG. 6, the two frequency-domain units may also be discrete. The second transmission and the third transmission each carry data information of the first transport block. The third transmission further carries a reference signal.

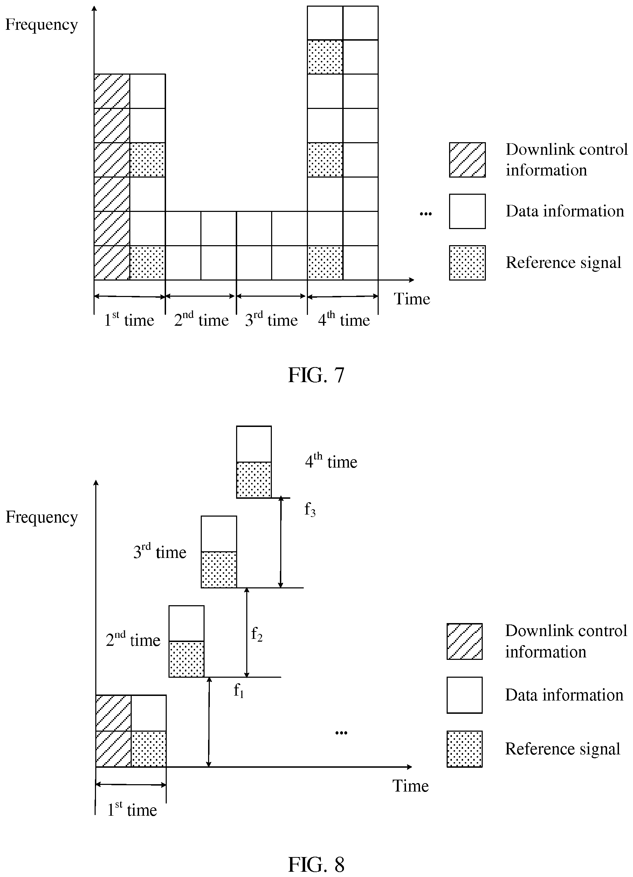

FIG. 7 is a schematic diagram of a method according to another embodiment of this application. FIG. 7 shows four times of transmission of a first transport block. The first transmission occupies two time units in time domain, and occupies six frequency-domain units in frequency domain. The first transmission carries downlink control information and data information of the first transport block. The second transmission and the third transmission each occupy two time units in time domain, and occupy two frequency-domain units in frequency domain. The fourth transmission occupies two time units in time domain, and occupies eight frequency-domain units in frequency domain. The second transmission, the third transmission, and the fourth transmission each carry data information of the first transport block. The fourth transmission further carries a reference signal.

In the embodiment shown in FIG. 7, because of a service requirement, for example, latency and reliability requirements of URLLC, a network device determines, based on at least one of the following factors: acknowledgment (acknowledgment, ACK)/negative acknowledgment (negative acknowledgment, NACK) feedback occasion of a terminal device, a service block error rate (Block Error Rate, BLER), and channel quality of a channel on which the service is located, and the like, to allocate more frequency-domain resources to one transmission than those allocated to previous transmission, so that the terminal device receiving the service can correctly perform decoding according to a latency requirement of the service.

FIG. 8 is a schematic diagram of a method according to an embodiment of this application. FIG. 8 shows four times of transmission of a first transport block. The first transmission occupies two time units in time domain, and occupies two frequency-domain units in frequency domain. The first transmission carries data information of the first transport block and downlink control information. The second transmission occupies one time unit in time domain, and occupies two frequency-domain units in frequency domain. There is a frequency offset between the two frequency-domain units occupied by the second transmission in frequency domain and the two frequency-domain units occupied by the first transmission in frequency domain. For example, there is a frequency interval f₁ between frequency-domain start resource locations of the two times of transmission. There is a frequency offset between two frequency-domain units occupied by the third transmission in frequency domain and the two frequency-domain units occupied by the second transmission in frequency domain. For example, there is a frequency interval f₂ between frequency-domain start resource locations of the two times of transmission. There is a frequency offset between two frequency-domain units occupied by the fourth transmission in frequency domain and the two frequency-domain units occupied by the third transmission in frequency domain. For example, there is a frequency interval f₃ between frequency-domain start resource locations of the two times of transmission. f₁, f₂, and f₃ may be the same or different. This is not limited in this application.

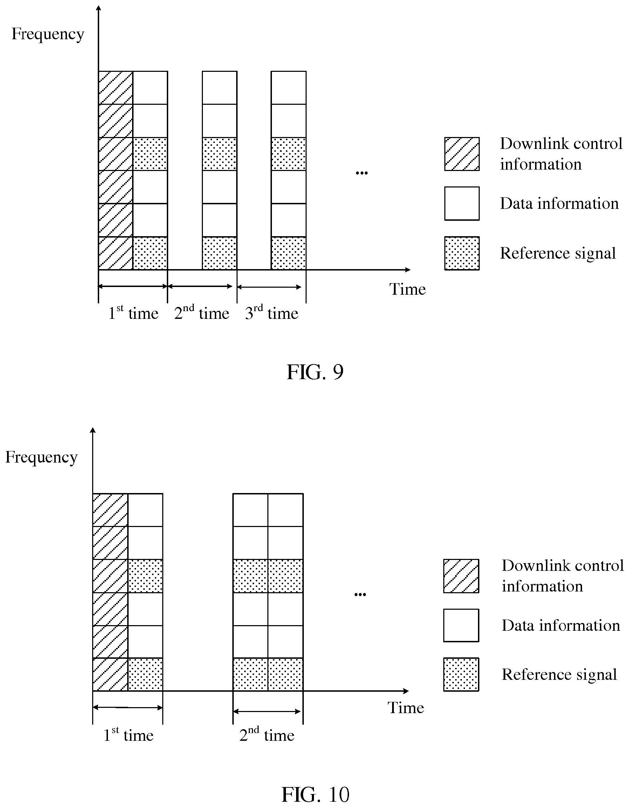

FIG. 9 is a schematic diagram of a method according to an embodiment of this application. FIG. 9 shows three times of transmission of a first transport block. The first transmission occupies two time units in time domain, and occupies six frequency-domain units in frequency domain. The first transmission carries data information of the first transport block and downlink control information. The downlink control information is used to schedule the three times of transmission of the first transport block. The second transmission occupies two time units in time domain, and occupies six frequency-domain units in frequency domain, and a network device sets transmit power to 0 for the 1^{st} time unit in the second transmission, that is, the 1^{st} time unit in the second transmission is not used to send the first transport block. Likewise, the third transmission occupies two time units in time domain, and occupies six frequency-domain units in frequency domain, and the network device sets transmit power to 0 for the 1^{st} time unit in the third transmission, that is, the 1^{st} time unit in the third transmission is not used to send the first transport block.

That is, for one transmission, transmit power of one or more time units in a time-domain resource occupied by the transmission may be 0, and likewise, transmit power of one or more frequency-domain units in a frequency-domain resource occupied by the transmission may also be 0.

Therefore, according to a time-frequency resource assignment manner shown in FIG. 9, waste of time-frequency resources can be effectively reduced. This improves resource utilization when multiplexing is performed for services of a plurality of terminal devices. Further, when there are both an eMBB service and a URLLC service, and communication is performed for the URLLC service according to the time-frequency resource assignment manner shown in FIG. 9, impact of the URLLC service on the eMBB service can be effectively reduced.

FIG. 10 is a schematic diagram of a method according to an embodiment of this application. FIG. 10 shows two times of transmission of a first transport block. The first transmission occupies two time units in time domain. The second transmission occupies two time units in time domain. Downlink control information carried in the first transmission is used to schedule the two times of transmission. A time interval between the first transmission and the second transmission is two time units, that is, the time interval between the two times of transmission may be greater than a time interval at which a receiving device feeds back an ACK/NACK to a sending device. Specifically, between the two times of transmission, if the sending device receives a NACK response, next transmission is further performed; or if an ACK response is received, next transmission with the terminal device is not performed.

That is, there is a specific time interval between at least two times of transmission of a same transport block, and magnitude of the time interval may be one or more OFDM symbols, or may be a mini-slot, a slot, or the like. This is not limited in this application.

It should be understood that the embodiment of FIG. 10 is described merely by using two times of transmission as an example, that is, a case in which K = 2. A value of K in an actual case is not limited in this application.

When receiving the ACK response, the network device stops performing the next transmission with the terminal device. Therefore, the method in the embodiment shown in FIG. 10 help further improve resource utilization.

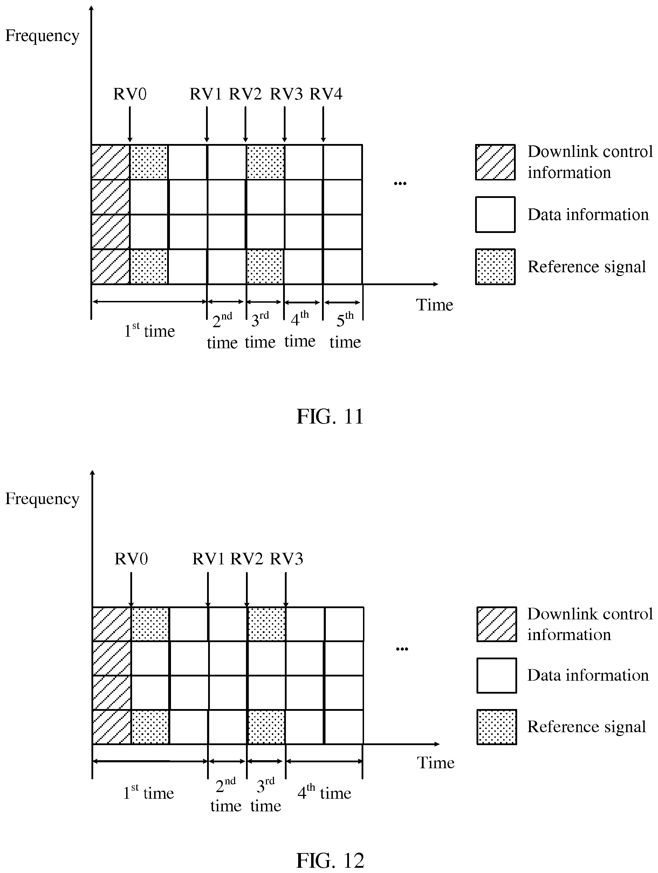

FIG. 11 is a schematic diagram of a method according to an embodiment of this application. FIG. 11 shows five times of transmission of a first transport block. The five times of transmission occupy same four frequency-domain units in frequency domain, in other words, the five times of transmission use a same frequency-domain resource. However, in time domain, the first transmission occupies three time units and uses a redundancy version RV0, and the second transmission to the fifth transmission each occupy one time unit and use redundancy versions RV1, RV2, RV3, and RV4, respectively. RV versions of all the transmission may be the same or different. To be specific, compared with the embodiment shown in FIG. 4, according to the method described in the embodiment of FIG. 11, information carried in the first transport block is mapped to more time units while a same target block error rate is ensured for initial transmission, so that occupation of frequency-domain resources can be reduced.

Therefore, in the method in the embodiment shown in FIG. 11, time-frequency resources occupied by the first transport block is more flattened. When there are both an eMBB service and a URLLC service, this helps reduce impact of the URLLC service on the eMBB service, and further facilitates resource multiplexing for a plurality of URLLC services.

FIG. 12 is a schematic diagram of a method according to an embodiment of this application. FIG. 12 shows four times of transmission of a first transport block. The four times of transmission occupy same four frequency-domain units in frequency domain, in other words, the four times of transmission use a same frequency-domain resource. However, in time domain, the first transmission occupies three time units, the second transmission and the third transmission each occupy one time unit, and the fourth transmission occupies two time units. Redundancy versions are RV0, RV1, RV2, and RV3, respectively. RV versions of all the transmission may be the same or different. To be specific, compared with FIG. 11, to ensure accuracy of service transmission, the fourth transmission may occupy more time-domain resources than the third transmission.

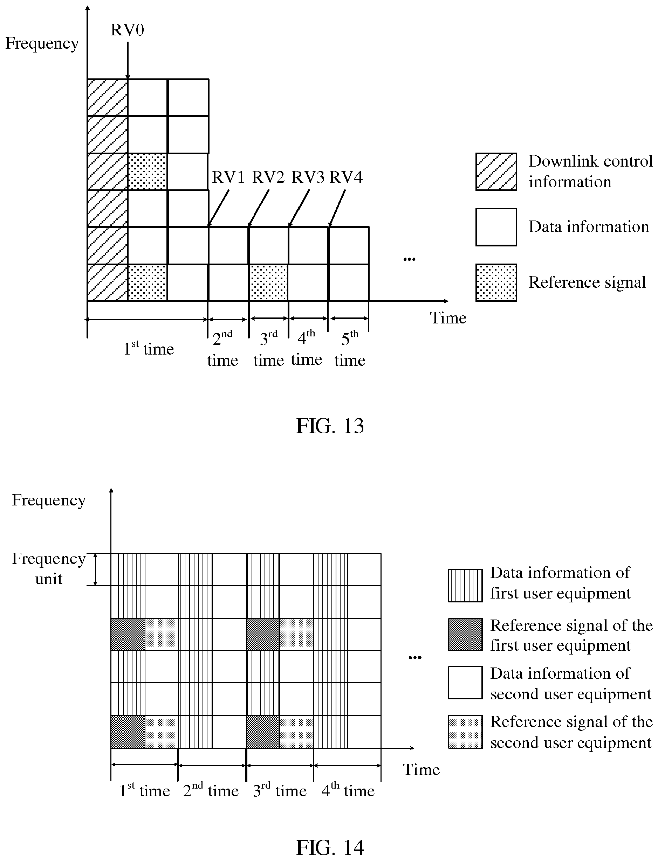

FIG. 13 is a schematic diagram of a method according to an embodiment of this application. FIG. 13 shows five times of transmission of a first transport block. The first transmission occupies four frequency-domain units in frequency domain, and occupies three time units in time domain. The second transmission to the fifth transmission occupy same two frequency-domain units in frequency domain, and each occupy one time unit in time domain. Redundancy versions are RV1, RV2, RV3, and RV4, respectively. RV versions of all the transmission may be the same or different.

That is, a size of a time-domain resource occupied by the first transmission is different from that occupied by subsequent transmission, and a size of a frequency-domain resource occupied by the first transmission is different from that occupied by subsequent transmission.

Therefore, according to the method provided in this embodiment of this application, resource utilization can be improved while service requirements for high reliability and a low latency are met.

It should be understood that the time units and the frequency-domain units described in FIG. 4 to FIG. 13 may be alternatively based on a unit of other duration and another frequency value. This is not limited in this application.

It should be further understood that for uplink data transmission, communication may also be performed according to the method described in the embodiments of FIG. 3 to FIG. 13. It should be noted that, different from that the first transmission of downlink data transmission carries downlink control information, the first transmission of the uplink data transmission may not include control information. Therefore, K times of uplink transmission of a first transport block may be scheduled by using DCI that is used to schedule uplink transmission and that is sent by a network device; or K times of uplink transmission of a first transport block is scheduled by using higher layer signaling sent by a network device; or a network device and a terminal device schedule a plurality of times of transmission of a first transport block according to a predefined rule. This is not limited in this application.

It should be understood that the manners, shown in FIG. 4 to FIG. 13, in which K times of transmission of a same transport block occupy a time-frequency resource are merely examples, and in an actual communication process, K times of transmission of one transport block may occupy a time-frequency resource in another manner. This is not limited in this application.

The foregoing describes the manners in which a plurality of times of transmission of a same transport block occupy a time-frequency resource with reference to FIG. 4 to FIG. 13. The following describes how to perform resource multiplexing when there are services of at least two terminal devices in an embodiment of this application with reference to FIG. 14 to FIG. 21.

FIG. 14 is a schematic diagram of a method according to an embodiment of this application. FIG. 14 shows four times of transmission of a first transport block that belongs to a first terminal device. The first transmission to the fourth transmission occupy a same frequency-domain resource. As shown in FIG. 14, the four times of transmission occupy six frequency-domain units. A time-domain resource occupied by the first transmission is the 1^{st} time unit, a time-domain resource occupied by the second transmission is the 3^{rd} time unit, a time-domain resource occupied by the third transmission is the 5^{th} time unit, and a time-domain resource occupied by the fourth transmission is the 7^{th} time unit. Likewise, FIG. 14 also shows four times of transmission of a first transport block that belongs to a second terminal device. The first transmission to the fourth transmission occupy a same frequency-domain resource. As shown in FIG. 14, the four times of transmission occupy six frequency-domain units. A time-domain resource occupied by the first transmission is the 2^{nd} time unit, a time-domain resource occupied by the second transmission is the 4^{th} time unit, a time-domain resource occupied by the third transmission is the 6^{th} time unit, and a time-domain resource occupied by the fourth transmission is the 8^{th} time unit.

That is, resource multiplexing is performed, in a time division multiplexing mode, on resources occupied by the first transport block of the first terminal device and resources occupied by the first transport block of the second terminal device.

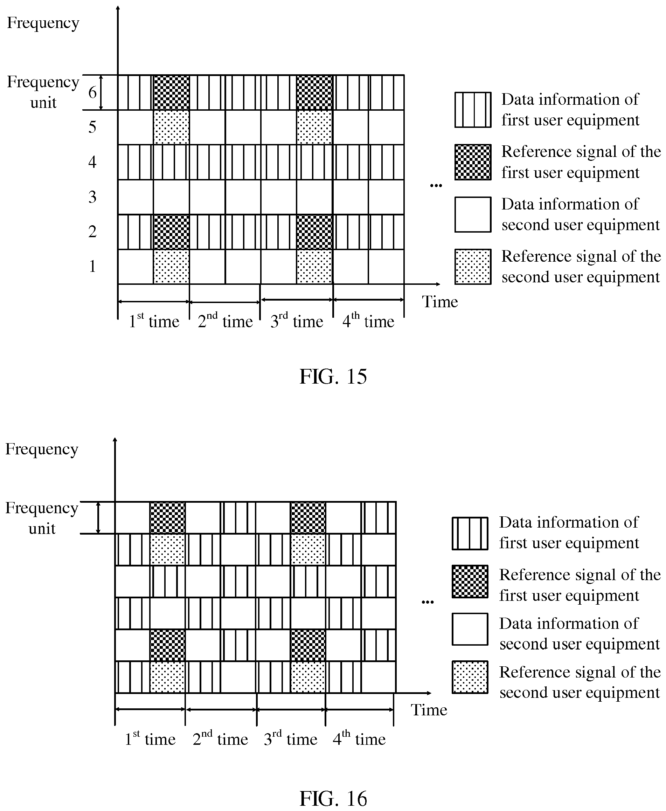

FIG. 15 is a schematic diagram of a method according to an embodiment of this application. FIG. 15 shows four times of transmission of a first transport block that belongs to a first terminal device. The first transmission to the fourth transmission occupy a same frequency-domain resource. As shown in FIG. 15, the four times of transmission occupy three discrete frequency-domain units: the 1^{st} frequency-domain unit, the 3^{rd} frequency-domain unit, and the 5^{th} frequency-domain unit. In time domain, each of the four times of transmission occupies two time units. Likewise, FIG. 15 also shows four times of transmission of a first transport block that belongs to a second terminal device. The first transmission to the fourth transmission occupy a same frequency-domain resource. As shown in FIG. 15, the four times of transmission occupy three discrete frequency-domain units: the 2^{nd} frequency-domain unit, the 4^{th} frequency-domain unit, and the 6^{th} frequency-domain unit. In time domain, each of the four times of transmission occupies two time units.

That is, resource multiplexing is performed, in a frequency division multiplexing mode, on the first transport block of the first terminal device and the first transport block of the second terminal device.

FIG. 16 is a schematic diagram of a method according to an embodiment of this application. FIG. 16 shows time-frequency resources occupied by four times of transmission of a first transport block that belongs to a first terminal device, and time-frequency resources occupied by four times of transmission of a first transport block that belongs to a second terminal device.

That is, resource multiplexing is performed, in both a time division multiplexing mode and a frequency division multiplexing mode, on resources occupied by the first transport block of the first terminal device and resources occupied by the first transport block of the second terminal device.

It should be understood that the resource multiplexing modes of the first terminal device and the second terminal device shown in FIG. 14 to FIG. 16 are merely examples, and in an actual communication process, resource multiplexing may be performed on services of a plurality of terminal devices, and a time-frequency resource assignment manner for each terminal device may be any one of the manners shown in FIG. 4 to FIG. 13, or may be another manner. This is not limited in this application.

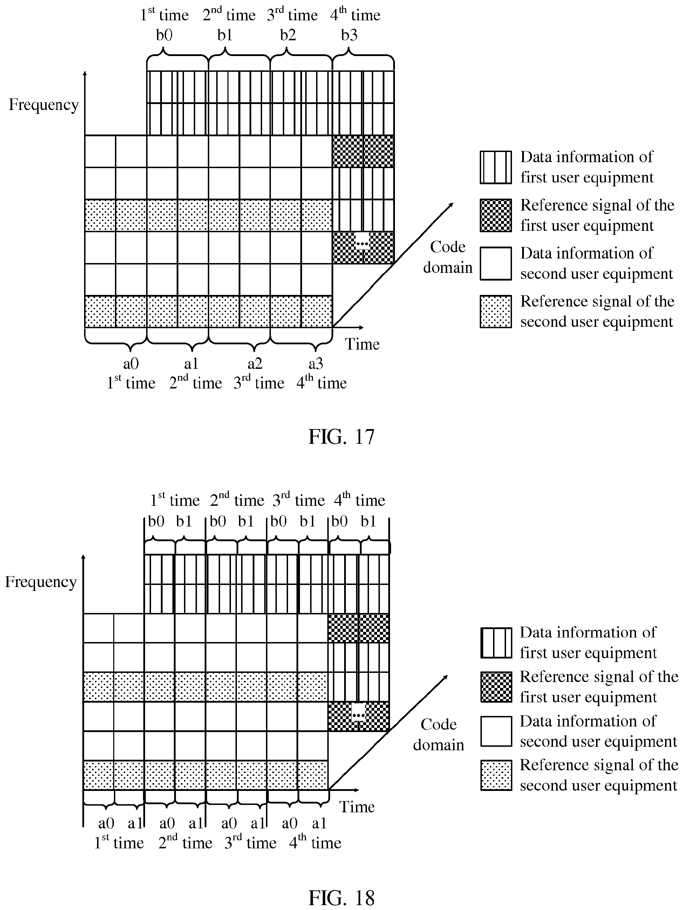

FIG. 17 is a schematic diagram of a method according to another embodiment of this application. A first transport block of a first terminal device needs to be transmitted for K times, and a first transport block of a second terminal device also needs to be transmitted for K times. An orthogonal covering code (orthogonal covering code, OCC) multiplexing mode may be used for the K times of transmission of the first terminal device and the K times of transmission of the second terminal device, to use a same time-frequency resource for the first transport block of the first terminal device and the first transport block of the second terminal device through multiplexing. Theoretically, by designing a proper code division multiplexing weight, K times of transmission can support orthogonal covering code multiplexing for a maximum of K users.

FIG. 17 is a schematic diagram of a method according to an embodiment of this application. As shown in FIG. 17, a transport block of a first terminal device needs to be transmitted for four times, and each transmission occupies two time units; a transport block of a second terminal device also needs to be transmitted for four times, and each transmission occupies two time units.

Optionally, the four times of transmission of the first terminal device and the four times of transmission of the second terminal device are separately weighted by using a code division multiplexing weight list shown in Table 1. Specifically, for the first terminal device, a weighted value of information carried in the first transmission is a0 = 1, corresponding to a weight 0 in Table 1; a weighted value of information carried in the second transmission is a1 = 1, corresponding to a weight 1 in Table 1; a weighted value of information carried in the third transmission is a2 = 1, corresponding to the weight 0 in Table 1; and a weighted value of information carried in the fourth transmission is a3 = 1, corresponding to the weight 1 in Table 1. For the second terminal device, a weighted value of information carried in the first transmission is b0 = 1, corresponding to a weight 0 in Table 1; a weighted value of information carried in the second transmission is b1 = -1, corresponding to a weight 1 in Table 1; a weighted value of information carried in the third transmission is b2 = 1, corresponding to the weight 0 in Table 1; and a weighted value of information carried in the fourth transmission is b3 = -1, corresponding to the weight 0 in Table 1.

**Table 1**

| | **Weight 0** | **Weight 1** |
|---|---|---|
| **First terminal device** | +1 | +1 |
| **Second terminal device** | +1 | -1 |

To be specific, the first transmission and the second transmission of the first terminal device are weighted by using the weight 0 and the weight 1 that belong to the first terminal device respectively, and the third transmission and the fourth transmission are weighted by using the weight 0 and the weight 1 that belong to the first terminal device respectively. Data carried in the first transmission and that carried in the second transmission need to be completely the same, that is, a same RV version, a same modulation scheme, and the like are used for the data carried in the two times of transmission. Data carried in the third transmission and that carried in the fourth transmission need to be completely the same, that is, a same RV version, a same modulation scheme, and the like are used for the data carried in the two times of transmission. Likewise, the first transmission and the second transmission of the second terminal device are weighted by using the weight 0 and the weight 1 that belong to the second terminal device respectively, and the third transmission and the fourth transmission are weighted by using the weight 0 and the weight 1 that belong to the second terminal device respectively. Data carried in the first transmission and that carried in the second transmission need to be completely the same, that is, a same RV version, a same modulation scheme, and the like are used for the data carried in the two times of transmission. Data carried in the third transmission and that carried in the fourth transmission need to be completely the same, that is, a same RV version, a same modulation scheme, and the like are used for the data carried in the two times of transmission.

Therefore, after the code division multiplexing weights shown in Table 1 are used to weight information carried in the four times of transmission of the first terminal device and weight information carried in the four times of transmission of the second terminal device, a receiving device can separately obtain service data of the first terminal device and service data of the second terminal device by using the code division multiplexing weights shown in Table 1.

Optionally, the four times of transmission of the first terminal device and the four times of transmission of the second terminal device are separately weighted by using a code division multiplexing weight list shown in Table 2. Specifically, for the first terminal device, a weighted value of information carried in the first transmission is a0 = 1, corresponding to a weight 0 in Table 2; a weighted value of information carried in the second transmission is a1 = 1, corresponding to a weight 1 in Table 2; a weighted value of information carried in the third transmission is a2 = 1, corresponding to a weight 2 in Table 2; and a weighted value of information carried in the fourth transmission is a3 = 1, corresponding to a weight 3 in Table 2. For the second terminal device, a weighted value of information carried in the first transmission is b0 = 1, corresponding to a weight 0 in Table 2; a weighted value of information carried in the second transmission is b1 = -1, corresponding to a weight 1 in Table 2; a weighted value of information carried in the third transmission is b2 = 1, corresponding to a weight 2 in Table 2; and a weighted value of information carried in the fourth transmission is b3 = -1, corresponding to a weight 3 in Table 2.

**Table 2**

| | **Weight 0** | **Weight 1** | **Weight 2** | **Weight 3** |
|---|---|---|---|---|
| **First terminal device** | +1 | +1 | +1 | +1 |
| **Second terminal device** | +1 | -1 | +1 | -1 |
| **Third terminal device** | +1 | +1 | -1 | -1 |
| **Fourth terminal device** | +1 | -1 | -1 | +1 |

Data carried in four consecutive times of transmission of each terminal device is completely the same, that is, a same RV version, a same modulation scheme, and the like are used for the four times of transmission. Table 2 further shows code division multiplexing weights for the third terminal device and code division multiplexing weights for the fourth terminal device. Theoretically, for four times of transmission, time-frequency resource multiplexing can be implemented for a maximum of four terminal devices.

Therefore, after the code division multiplexing weights shown in Table 2 are used to weight information carried in the four times of transmission of the first terminal device and weight information carried in the four times of transmission of the second terminal device, a receiving device can separately obtain service information of the first terminal device and service information of the second terminal device by using the code division multiplexing weights shown in Table 2.

It should be understood that Table 1 and Table 2 are merely examples of a code division multiplexing weight list, and there are other forms of code division multiplexing weight lists depending on data of a terminal device and a quantity of times of transmission for each terminal device. This is not limited in this application.

It should be further understood that quantities K of times of transmission for first transport blocks of terminal devices may be different in an actual communication process; therefore a terminal device may perform multiplexing only on a partially overlapping time-frequency resource of at least two terminal devices. This is not limited in this application.

It should be understood that a same code division multiplexing weight or different code division multiplexing weights may be used for a reference signal and a data signal. This is not limited in this application.

It should be further understood that for downlink communication, if first transmission carries downlink control information, the downlink control information carried in the first transmission may also be weighted by using a code division multiplexing weight. For example, information carried in the first transmission is weighted by using a code division multiplexing weight shown in Table 1. In this case, information carried in the second transmission is completely the same as the information carried in the first transmission, that is, also includes downlink control information.

It should be understood that according to the code division multiplexing weight list shown in Table 1, for the first terminal device, two consecutive times of transmission, that is, the first transmission and the second transmission, form one orthogonal transmission group, and the orthogonal transmission group includes two time units. Likewise, the third transmission and the fourth transmission form one orthogonal transmission group, and the orthogonal transmission group includes four time units. In other words, in the embodiment shown in Table 1, one orthogonal transmission group of the first terminal device occupies four time units. For the second terminal device, one orthogonal transmission group also includes four time units, that is, one orthogonal transmission group of the second terminal device also occupies four time units. To implement code division multiplexing for the two terminal devices, the one orthogonal transmission group of the first terminal device and the one orthogonal transmission group of the second terminal device overlap in time domain.

That is, in the embodiment shown in FIG. 17, code division multiplexing for a plurality of terminal devices is implemented by performing code division multiplexing weighting on information carried in each transmission of each terminal device. To be specific, code division multiplexing weighting may be performed on information carried in one or more time units of each terminal device, to implement code division multiplexing for a plurality of terminal devices; or code division multiplexing weighting may be performed on information carried in one or more frequency-domain units of each terminal device, to implement code division multiplexing for a plurality of terminal devices.

FIG. 18 is a schematic diagram of a method according to an embodiment of this application. As shown in FIG. 18, a service of a first terminal device requires four times of transmission, and each transmission occupies two time units; a service of a second terminal device also requires four times of transmission, and each transmission occupies two time units.

Optionally, a code division multiplexing weight list shown in Table 1 is used. For the first terminal device, a weighted value of information carried in the 1^{st} time unit in the first transmission is a0 = 1, corresponding to a weight 0 in Table 1; and a weighted value of information carried in the 2^{nd} time unit in the first transmission is a1 = 1, corresponding to a weight 1 in Table 1. The two time units form one orthogonal transmission group. Likewise, information carried in the second transmission, the third transmission, and the fourth transmission is correspondingly weighted. For the second terminal device, a weighted value of information carried in the 1^{st} time unit in the first transmission is b0 = 1, corresponding to a weight 0 in Table 1; and a weighted value of information carried in the 2^{nd} time unit in the first transmission is b1 = -1, corresponding to a weight 1 in Table 1. The two time units form one orthogonal transmission group. Likewise, information carried in the second transmission, the third transmission, and the fourth transmission is correspondingly weighted.

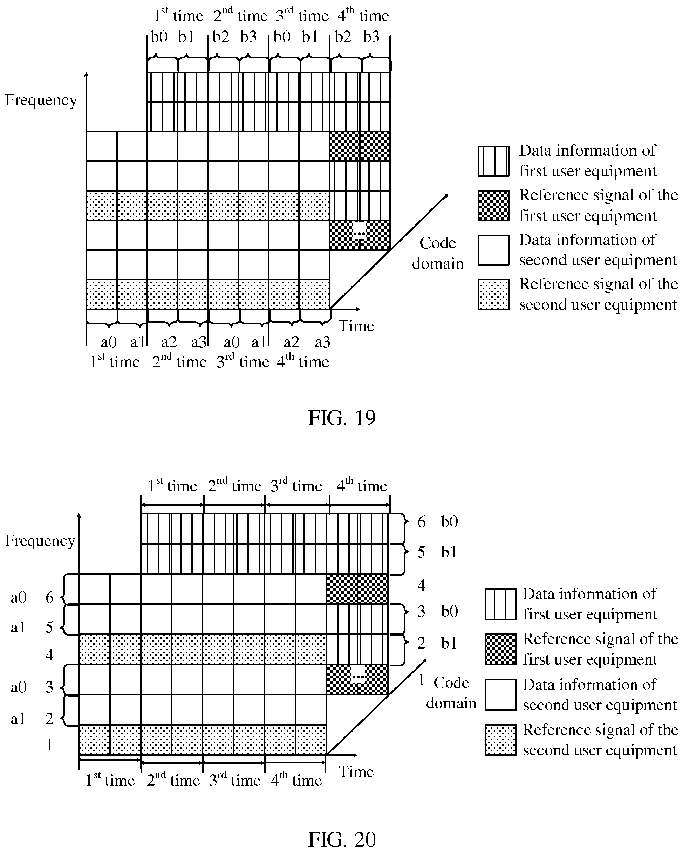

FIG. 19 is a schematic diagram of a method according to an embodiment of this application. As shown in FIG. 19, a service of a first terminal device requires two times of transmission, and each transmission occupies four time units; a service of a second terminal device also requires two times of transmission, and each transmission occupies four time units.

Optionally, a code division multiplexing weight list shown in Table 2 is used. For the first terminal device, a weighted value of information carried in the 1^{st} time unit in the first transmission is a0 = 1, corresponding to a weight 0 in Table 2; a weighted value of information carried in the 2^{nd} time unit in the first transmission is a1 = 1, corresponding to a weight 1 in Table 2; a weighted value of information carried in the 3^{rd} time unit in the first transmission is a2 = 1, corresponding to a weight 2 in Table 2; and a weighted value of information carried in the 4^{th} time unit in the first transmission is a3 = 1, corresponding to a weight 3 in Table 2. That is, the four time units occupied by this transmission form one orthogonal transmission group. Likewise, information carried in the second transmission of the first terminal device is correspondingly weighted. For the second terminal device, a weighted value of information carried in the 1^{st} time unit in the first transmission is b0 = 1, corresponding to a weight 0 in Table 2; a weighted value of information carried in the 2^{nd} time unit in the first transmission is b1 = -1, corresponding to a weight 1 in Table 2; a weighted value of information carried in the 3^{rd} time unit in the first transmission is b2 = 1, corresponding to a weight 2 in Table 2; and a weighted value of information carried in the 4^{th} time unit in the first transmission is b3 = -1, corresponding to a weight 3 in Table 2. The four time units occupied by this transmission form one orthogonal transmission group. Likewise, information carried in the second transmission of the second terminal device is correspondingly weighted.

FIG. 20 is a schematic diagram of a method according to an embodiment of this application. As shown in FIG. 20, a service of a first terminal device requires four times of transmission, and each transmission occupies two time units; a service of a second terminal device also requires four times of transmission, and each transmission occupies two time units.

Optionally, a code division multiplexing weight list shown in Table 1 is used. For the first terminal device, a weighted value of information carried in the 2^{nd} frequency-domain unit is a0 = 1, corresponding to a weight 0 in Table 1; and a weighted value of information carried in the 3^{rd} frequency-domain unit is a1 = 1, corresponding to a weight 1 in Table 1. The two frequency-domain units form one orthogonal transmission group. Likewise, information carried in the 5^{th} frequency-domain unit and information carried in the 6^{th} frequency-domain unit are weighted by using the weight 0 and the weight 1 respectively. For the second terminal device, a weighted value of information carried in the 2^{nd} frequency-domain unit is b0 = 1, corresponding to a weight 0 in Table 1; and a weighted value of information carried in the 3^{rd} frequency-domain unit is b1 = -1, corresponding to a weight 1 in Table 1. The two frequency-domain units form one orthogonal transmission group. Likewise, information carried in the 5^{th} frequency-domain unit and information carried in the 6^{th} frequency-domain unit are weighted by using the weight 0 and the weight 1 respectively.

It should be understood that in the embodiment shown in FIG. 20, the frequency-domain units may be subcarriers.

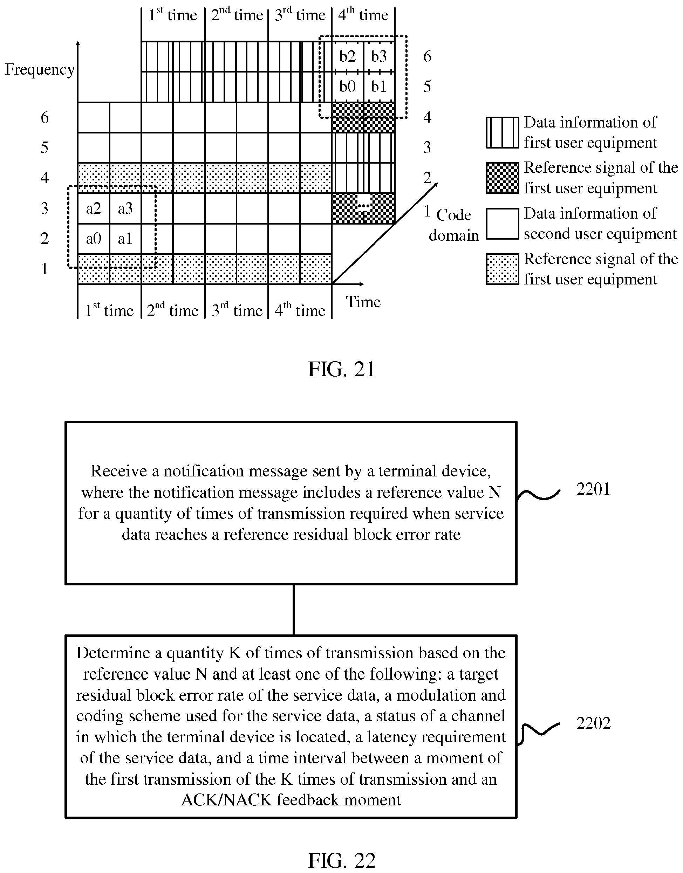

FIG. 21 is a schematic diagram of a method according to an embodiment of this application. As shown in FIG. 21, a first transport block of a first terminal device needs to be transmitted for four times, and each transmission occupies two time units; a first transport block of a second terminal device also needs to be transmitted for four times, and each transmission occupies two time units.

Optionally, a code division multiplexing weight list shown in Table 2 is used. For first transmission of the first terminal device, four time-frequency units a0, a1, a2, and a3 in a dashed-line box in the figure are weighted by using a weight 0, a weight 1, a weight 2, and a weight 3 in Table 2 respectively, to form one orthogonal transmission group. Likewise, information carried in the second transmission, the third transmission, and the fourth transmission is correspondingly weighted. For fourth transmission of the second terminal device, four time-frequency units b0, b1, b2, and b3 in a dashed-line box in the figure are weighted by using a weight 0, a weight 1, a weight 2, and a weight 3 in Table 2 respectively, to form one orthogonal transmission group. Likewise, information carried in the first transmission, the second transmission, and the third transmission is correspondingly weighted.

With reference to the embodiments shown in FIG. 17 to FIG. 21, the foregoing describes how to use an orthogonal code division multiplexing mode to reuse a same time-frequency resource for services of different terminal devices.

FIG. 14 to FIG. 21 show a resource multiplexing mode for first service user equipment and second service user equipment. It should be understood that the first service user equipment and the second service user equipment may be same user equipment, or may be different user equipments. When the first service user equipment and the second service user equipment are same user equipment, a first service and a second service are different services of the same user equipment, or a first service and a second service are data in different HARQ processes of a same type of service of the same user equipment.

Further, if both the first service and the second service exist, the following resource multiplexing modes may be further used for the two services, where the second service may be an eMBB service, and the first service may be a URLLC service.

Mode 1: In K times of transmission for the first service, first n times of transmission exclusively occupy a time-frequency resource. Optionally, a high-order modulation scheme, for example, a 16 quadrature amplitude modulation (quadrature amplitude modulation, QAM) scheme, is used. In the (n+1)^{th} transmission to the m^{th} transmission of the K times of transmission, a modulation scheme with an order lower than that of the modulation scheme used for the first n times of transmission, for example, a quadrature phase shift keying (quadrature phase shift keying, QPSK) modulation scheme, may be used, so that resource multiplexing can be performed on a same time-frequency resource for the first service and the second service. n and m are positive integers, and n+1 < m ≤ K.

In the mode 1, a receiving device of the first service and/or the second service needs to support an interference cancellation (interference cancellation, IC) algorithm. To be specific, the receiving device can separately demodulate data of the first service and data of the second service, and then perform a demodulation-based IC algorithm or a decoding-based IC algorithm. In this embodiment of this application, because a QAM modulation scheme with a relatively low order is used in the (n+1)^{th} transmission to the m^{th} transmission of the first service, demodulation performance of the receiving device for the first service can be improved.

Mode 2: In K times of transmission for the first service, first n times of transmission exclusively occupy a time-frequency resource. Optionally, a high-order modulation scheme, for example, a 16QAM modulation scheme, is used. In the (n+1)^{th} transmission to the m^{th} transmission of the K times of transmission, non-orthogonal multiple access (non-orthogonal multiple access, NOMA) multiplexing may be performed for the first service and the second service. It should be understood that a receiving device of the first service and/or the second service needs to support demodulation for the NOMA multiplexing mode, and then determine data of the second service from a constellation diagram obtained through demodulation, and decode the data. n and m are positive integers, and m is greater than n.

Mode 3: In K times of transmission for the first service, first n times of transmission exclusively occupy a time-frequency resource. In the (n+1)^{th} transmission to the m^{th} transmission of the K times of transmission, a layer (for example, a layer 1) lower than that used for the second service may be used for the first service, so that MIMO spatial multiplexing is performed for the first service and the second service.

Further, the MIMO spatial multiplexing performed for the first service and the second service may be non-coherent, that is, a precoding operation is separately performed for the two services, and the receiving device performs joint reception and separately performs MIMO decoding; or the MIMO spatial multiplexing performed for the first service and the second service may be coherent, that is, a precoding operation is jointly performed on the two services, and the receiving device performs joint MIMO decoding.

Mode 4: In K times of transmission for the first service, first n times of transmission exclusively occupy a time-frequency resource. Optionally, relatively high transmission power is used in the first n times of transmission for the first service. In the (n+1)^{th} transmission to the m^{th} transmission of the K times of transmission, lower transmit power may be used for transmission of the first service, so that power multiplexing is performed for the transmission for the first service and transmission for the second service.

It should be understood that the first service may be a URLLC service or an eMBB service, the second service may be a URLLC service or an eMBB service, and the first service is different from the second service.

Further, the terminal device can learn a resource assignment manner used for the K times of transmission of the first transport block, in the following manners, including an explicit indication manner and an implicit indication manner.

In the explicit indication manner, optionally, in an embodiment of this application, the method further includes: sending, by the network device, resource indication information to the terminal device, where the resource indication information is used to indicate at least one of the following: a frequency-domain resource occupied by the K times of transmission; and a time-domain resource occupied by the K times of transmission.

Specifically, the resource indication information may be carried in higher layer signaling, for example, an RRC message. The higher layer signaling carries a predefined resource assignment manner. For example, the higher layer signaling carries a number of the predefined resource assignment manner. A receiving device parses the number of the resource assignment manner carried in the higher layer signaling. For another example, the higher layer signaling includes a ratio factor. The ratio factor is used to indicate a ratio of a time-frequency resource occupied by each of the K times of transmission to a time-frequency resource occupied by first transmission. It should be understood that the resource indication information may be alternatively in another form. This is not limited in this application.

In the implicit indication manner, optionally, in an embodiment of this application, at least one of the following is a predefined resource: a frequency-domain resource occupied by the K times of transmission; and a time-domain resource occupied by the K times of transmission.

Optionally, a resource occupied by the K times of transmission may be determined based on a modulation and coding scheme (modulation and coding scheme, MCS) used for the K times of transmission. Specifically, MCSs with similar characteristics may be grouped into one MCS group, and a same predefined resource assignment manner is used for transmission belonging to the MCS group. Specifically, Table 3 is a schematic table of a frequency-domain resource assignment manner. Table 3 shows three MCS groups: a low-order MCS group, a medium-order MCS group, and a high-order MCS group. For the low-order MCS group, a frequency-domain resource occupied in initial transmission is N frequency-domain units, and a frequency-domain resource occupied in retransmission is still N frequency-domain units. For the medium-order MCS group, a frequency-domain resource occupied in initial transmission is N frequency-domain units, and a frequency-domain resource occupied in retransmission is N/2 frequency-domain units. For the high-order MCS group, a frequency-domain resource occupied in initial transmission is N frequency-domain units, and a frequency-domain resource occupied in retransmission is N/4 frequency-domain units. N is a positive integer.

The foregoing three MCS groups may be differentiated based on a code rate. An MCS whose code rate is lower than a code rate a belongs to the low-order MCS group, an MCS whose code rate is between the code rate a and a code rate b belongs to the medium-order MCS group, and an MCS whose code rate is higher than the code rate b belongs to the high-order MCS group, where a, b, and c are positive real numbers. Alternatively, the foregoing three MCS groups may be differentiated based on a modulation scheme used for transmission. For example, QPSK modulation belongs to the low-order MCS, 16QAM belongs to the medium-order MCS, and 64QAM belongs to the high-order MCS.

**Table 3**

| **MCS group** | **Initial transmission** | **Retransmission** |
|---|---|---|
| Low-order MCS group | N | N |
| Medium-order MCS group | N | N/2 |
| High-order MCS group | N | N/4 |

Optionally, a resource occupied by the K times of transmission may be alternatively determined based on a target BLER corresponding to the K times of transmission. It should be understood that the target BLER herein is not a target BLER corresponding to initial transmission, but is a BLER that a service carried in the K times of transmission finally needs to satisfy. A lower target BLER value indicates that a service occupies more frequency-domain resources, to ensure that a target BLER required for the service is reached within a relatively short time.

With reference to a specific example, the following describes how to determine, based on a target BLER corresponding to K times of transmission, a resource occupied by the K times of transmission. Specifically, Table 4 is a schematic table of a frequency-domain resource assignment manner. Table 4 shows three MCS groups: a low-order MCS group, a medium-order MCS group, and a high-order MCS group. For the low-order MCS group, a frequency-domain resource occupied in initial transmission is N frequency-domain units, and a frequency-domain resource occupied in retransmission is N×M frequency-domain units. For the medium-order MCS group, a frequency-domain resource occupied in initial transmission is N frequency-domain units, and a frequency-domain resource occupied in retransmission is N×M/2 frequency-domain units. For the high-order MCS group, a frequency-domain resource occupied in initial transmission is N frequency-domain units, and a frequency-domain resource occupied in retransmission is N×M/4 frequency-domain units. N is a positive integer, and M is a positive real number. Further, a relationship between a value of M and a target BLER is shown in Table 5.

It should be noted that Table 4 and Table 5 are not necessary used together. Table 5 may be used independently. In this case, MCS groups are not differentiated.

**Table 4**

| **MCS group** | **Initial transmission** | **Retransmission** |
|---|---|---|
| Low-order MCS group | N | N×M |
| Medium-order MCS group | N | N×M/2 |
| High-order MCS group | N | N×M/4 |

**Table 5**

| **Target BLER** | M |
|---|---|
| 99.9% (0.1%) | 1/4 |
| 99.99% (0.01%) | 1/2 |
| 99.999% (0.001%) | 1 |
| 99.99999% (0.00001%) | 3/2 |
| 99.9999999% (0.0000001%) | 2 |

It should be understood that a predefined resource allocated manner may be further determined based on a communication scenario. For example, a first resource assignment manner is used in an area exclusively occupied by a URLLC service, and a second resource assignment manner is used in an area in which both an eMBB service and a URLLC service exist. For example, in the first resource assignment manner, a capacity of the URLLC service needs to be satisfied, and spectral efficiency of the URLLC service needs to be improved to the greatest extent; and in the second resource assignment manner, impact of the URLLC service on the eMBB service needs to be reduced to the greatest extent. The first resource assignment manner is different from the second resource assignment manner.

In an explicit indication manner, a resource occupied by the K times of transmission may be alternatively indicated by using downlink control information. Optionally, in an embodiment of this application, the downlink control information is further used to indicate at least one of the following: a frequency-domain resource occupied by the K times of transmission; and a time-domain resource occupied by the K times of transmission.

Optionally, a resource indication field is added to the downlink control information. For example, the resource indication field includes a ratio factor, and the ratio factor is used to indicate a ratio of a time-frequency resource occupied by each of the K times of transmission to a time-frequency resource occupied by first transmission. For another example, the resource indication field includes only one ratio factor, and the ratio factor is used to indicate a ratio of a time-frequency resource occupied by last M times of transmission of the K times of transmission to a time-frequency resource occupied by first (K - M) times of transmission. A value of M may be carried in another newly added resource indication field in the downlink control information, or may be semi-statically notified to a receive end by using higher layer signaling, for example, an RRC message. Generally, the time-frequency resource occupied by the last M times of transmission is greater than the time-frequency resource occupied by the first (K - M) times of transmission. For another example, the resource indication field may further include an offset parameter, used to indicate an offset between a start location of a resource occupied by one transmission of the K times of transmission and a start location of a resource occupied by first transmission. For another example, the resource indication field is similar to a resource assignment indication field (resource block assignment) in DCI, and is used to indicate a resource occupied by each of the K times of transmission. For another example, several resource assignment manners are predefined and numbered, and the resource indication field includes a number of a resource assignment manner used for each of the K times of transmission. It should be understood that the resource indication field may be alternatively in another form. This is not limited in this application.

Optionally, a resource assignment indication field in existing DCI may be reused to differently interpret the resource assignment indication reuse field, so as to determine the resource assignment manner used for each of the K times of transmission. For example, the resource assignment indication field in the DCI includes N bits, first M bits of the N bits are used to indicate a resource assignment manner for each retransmission of the K times of transmission, and last N - M bits are used to indicate a resource assignment manner for initial transmission. In this case, a size of the DCI does not change, and another manner needs to be used to notify a meaning of the resource assignment indication field in the DCI. For example, a special RNTI may be used to scramble CRC in the DCI, and a receiving device understands the reused resource assignment indication field in the DCI according to a new meaning.

It should be understood that the first transmission of the K times of transmission that is described in this embodiment of this application is the initial transmission of the K times of transmission, and the first transmission and the initial transmission are interchangeable. This is not limited in this application.

Optionally, in an embodiment of this application, for downlink transmission, if no downlink control information is included in a process of the first transmission of the K times of transmission, the method includes: determining a time-frequency resource occupied by the K times of transmission, where 1 < i ≤ K, K is an integer greater than 1, each of the K times of transmission carries at least data information of the first transport block, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and performing the K times of transmission on the time-frequency resource.

Optionally, in an embodiment of this application, for uplink transmission, the method includes: determining a time-frequency resource occupied by the K times of transmission, where 1 < i ≤ K, K is an integer greater than 1, each of the K times of transmission carries at least data information of the first transport block, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and performing the K times of transmission on the time-frequency resource.

FIG. 22 is a schematic flowchart of a method according to an embodiment of this application. The method is performed by a network device. As shown in FIG. 22, the method includes the following steps.

Step 2201: Receive a notification message sent by a terminal device, where the notification message includes a reference value N for a quantity of times of transmission required when service data reaches a reference residual block error rate.

Correspondingly, the terminal device determines the reference value N for the quantity of times of transmission required when the service data reaches the reference residual block error rate, and the terminal device sends the reference value N for the quantity of times of transmission to the network device, where N is a positive integer.

Step 2202: Determine a quantity K of times of transmission based on the reference value N and at least one of the following: a target residual block error rate of the service data, a modulation and coding scheme used for the service data, a status of a channel in which the terminal device is located, a latency requirement of the service data, and a time interval between a moment of the first transmission of the K times of transmission and an acknowledgement ACK/negative acknowledgement NACK feedback moment, where N and K are positive integers.

Therefore, the network device can determine the quantity K of times of transmission of the service data by receiving the reference value N sent by the terminal device.

Specifically, the network device may determine the quantity K of times of transmission based on a target block error rate of a service and the reference value N for the quantity of times of transmission that are carried in a first transport block. Table 6 shows a relationship between the quantity K of times of transmission and the target block error rate of the service that is carried in the first transport block.

**Table 6**

| **Service reliability (target block error rate)** | **Value of K** |
|---|---|
| 99.9% (0.1%) | N - 8 |
| 99.99% (0.01%) | N - 4 |
| 99.999% (0.001%) | N |
| 99.99999% (0.00001%) | N + 4 |
| 99.9999999% (0.0000001%) | N + 8 |

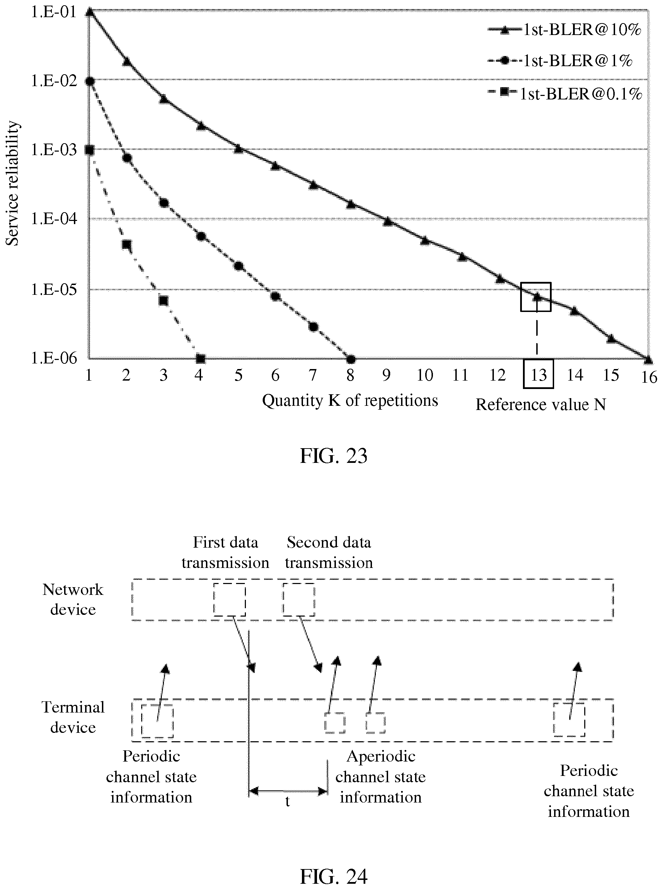

Table 6 actually reflects a relationship between service reliability and a quantity K of repetitions shown in FIG. 23. FIG. 23 shows three curves on which service initial-transmission block error rates are 10%, 1%, and 0.1% respectively. In an example in which a service initial-transmission block error rate is 10%, a corresponding reference value N for the quantity of repetitions when service reliability is 0.001% is 13. In this case, a corresponding value of K when service reliability is 0.1% is N - 8, a corresponding value of K when service reliability is 0.001% is N - 4, and so on.

Specifically, the quantity K of times of transmission is determined based on the modulation and coding scheme used for the service data. Table 7 shows a relationship between the quantity K of times of transmission and the modulation and coding scheme used for the service data. It should be understood that descriptions of MCS groups are consistent with the descriptions in the foregoing embodiment. Details are not described herein again.

**Table 7**

| **MCS group** | **Value of K** |
|---|---|
| High-order MCS | N |
| Medium-order MCS | N + 1 |
| Low-order MCS | N + 2 |

N in Table 6 and Table 7 indicates the reference value for the quantity of repetitions. Specifically, N may indicate a quantity of repetitions required when a controlled target BLER for initial transmission is Bi (for example, 10%) and a target BLER of a service reaches Br (for example, 0.001%). Herein, the target BLER of the service is a residual block error rate obtained when a decoding error still occurs after a plurality of times of transmission within a predefined time or a predefined quantity of times of transmission.

That the terminal device determines the reference value N for the quantity of times of transmission required when the service data reaches the reference residual block error rate includes: determining the reference value N based on at least one of the following: a demodulation and decoding capability of the terminal device, a channel type of the channel in which the terminal device is located, a moving speed of the terminal device, and a frame format parameter of a radio frame carrying the service data.

The frame format parameter includes a subcarrier spacing of the radio frame and a cyclic prefix (Cyclic Prefix, CP) length of the radio frame.

It should be understood that N may be predetermined by the network device and the terminal device; and N may be carried in a semi-static message, for example, an RRC message, reported by the terminal device to a network device; or N may be carried in a control message sent at a physical layer. The terminal device alternatively notifies the network device of N in another possible manner. This is not limited in this application.

Optionally, in an embodiment of this application, the terminal device may determine the reference value N for the quantity of times of transmission in the following manner.

The network device can determine, based on channel state information (channel state information, CSI), for example, CSI 1, periodically reported by the terminal device, a resource assignment (resource assignment, RA) manner and a modulation and coding scheme (modulation and coding scheme, MCS) for one transmission of the first transport block (for example, initial transmission of the first transport block) that the terminal device is scheduled to perform.

Further, after receiving the first transport block sent by the network device in one transmission (for example, the first transmission of the first transport block), the terminal device can activate aperiodic reporting of channel state information. The channel state information includes the reference value N for the quantity of times of transmission.

Specifically, in an embodiment, the terminal device determines reference configuration information according to stipulation of a protocol, or the terminal device determines reference configuration information based on higher layer signaling (for example, RRC signaling) delivered by the network device. The higher layer signaling sent by the network device carries the reference configuration information. After determining the reference configuration information, the terminal device further determines N based on a signal to interference plus noise ratio (signal to interference plus noise ratio, SINR) of a current downlink channel. The reference configuration information includes an RA and/or an MCS. The SINR of the downlink channel may be an SINR of full downlink bandwidth or an SINR of some subbands.

The terminal device reports the channel state information to the network device, where the channel state information includes the reference value N for the quantity of times of transmission. The network device may configure an actual quantity K of times of transmission of data (for example, the first transport block) based on N. The quantity K of times of transmission may be the same as N, or K and N may satisfy the mapping relationship in the foregoing embodiment. This is not limited in this application.

In another embodiment, the terminal device may determine N based on an RA and/or an MCS of one transmission of data (for example, the first transmission of the first transport block) and an SINR corresponding to the RA (in other words, determine N based on an SINR corresponding to bandwidth occupied by specific data transmission). For example, the terminal device determines the SINR corresponding to the RA based on a demodulation reference signal on the RA. Alternatively, the terminal device determines N based on an RA and/or an MCS of one transmission of data and an SINR corresponding to full bandwidth.

Specifically, the terminal device may store a mapping relationship between an MCS, an SINR, and N. For example, the terminal device stores Table 8. This corresponds to that the reference quantity N of repetitions required when data is sent by using different MCSs under different SINRs may be predefined on the terminal device. It should be understood that Table 8 is merely an example. This is not limited in this application.

**Table 8**

| | SINR1 | SINR2 | SINR3 |
|---|---|---|---|
| MCS1 | N1 | N4 | N7 |
| MCS2 | N2 | N5 | N8 |
| MCS3 | N3 | N6 | N9 |

For a URLLC service, when an SINR of a downlink channel is relatively small, a relatively low code rate needs to be used to transmit data on the downlink channel. A smaller SINR corresponds to a lower transmission code rate.

When data transmission requires a lower code rate, the terminal device needs to report a channel quality indicator (channel quality indicator, CQI) corresponding to the lower code rate, to ensure reliability of the URLLC service. However, an existing CQI table is limited, and the lower code rate may not have a corresponding value in the existing CQI table. Therefore, the CQI table needs to be extended so that the terminal device can report the CQI corresponding to the lower code rate to the network device. Therefore, if the channel state information reported by the terminal device to the network device includes the reference quantity N of repetitions, the network device repeatedly transmits the first transport block for K times (K is less than or equal to N) by using a code rate C1 in one transmission. In this case, an equivalent code rate of the transmission is C1/K, that is, a lower code rate can be obtained without a need of extending the CQI table.

Further, the terminal device may aperiodically report channel state information to the network device. Therefore, the network device can schedule data based on current channel state information in a more real-time manner, without a need of performing scheduling based on channel state information periodically reported last time, thereby improving service transmission reliability and meting a low latency requirement of a service.

The following provides several solutions for determining an occasion for reporting channel state information.

FIG. 24 is a schematic diagram according to an embodiment of this application. As shown in FIG. 24, a time t is a shortest time interval between a moment when a terminal device receives a first information block in one data transmission and a moment when channel state information corresponding to the one data transmission is reported, and a time interval T between a moment when the channel state information is actually reported and the moment when the first information block in the one data transmission is received is determined based on t. Further, the terminal device notifies a network device of the time interval T, where T ≥ t. It should be understood that different terminal devices have different processing capabilities, and therefore a value of t is related to a processing capability of the terminal device. t and T are positive numbers.

Specifically, the terminal device may add T to higher layer signaling or physical layer control signaling sent to the network device. After sending one data to the terminal device, the network device waits for the time interval T and is ready to receive aperiodic channel state information reported by the terminal device.

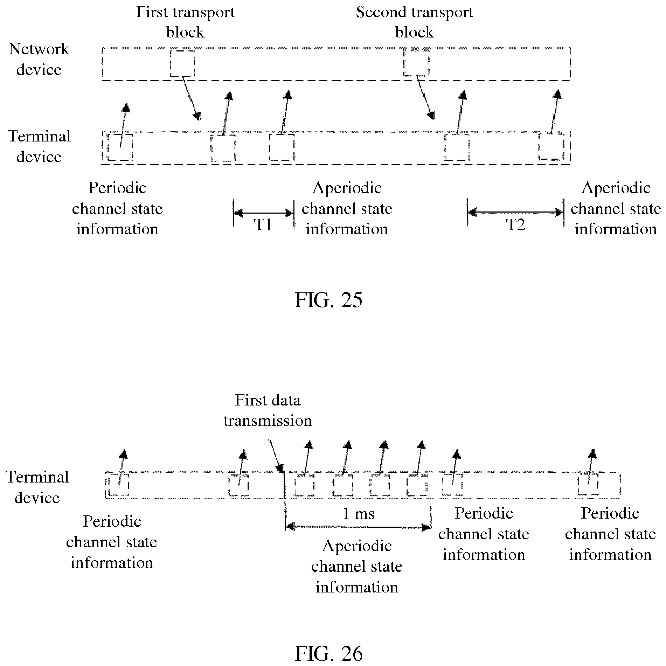

FIG. 25 is a schematic diagram according to another embodiment of this application. As shown in FIG. 25, a network device and a terminal device agree on a time interval T. There is a mapping relationship between the time interval T and a time unit occupied by a PDCCH corresponding to one transmission of a first transport block, or there is a mapping relationship between the time interval T and a time unit occupied by accompanying pilot information in one transmission process of a first transport block. It should be understood that the time unit may be at least one OFDM symbol, or may be another time-domain length. This is not limited in this application.

For example, as shown in FIG. 25, a time unit occupied by a PDCCH corresponding to one transmission of the first transport block is two OFDM symbols, a time interval T1 is one OFDM symbol, a time unit occupied by a PDCCH corresponding to one transmission of a second transport block is one OFDM symbol, and a time interval T2 is two OFDM symbols.

That is, after sending data to the terminal device each time, the network device waits for the time interval T and is ready to receive aperiodic channel state information reported by the terminal device.

FIG. 26 is a schematic diagram according to still another embodiment of this application. As shown in FIG. 26, a terminal device determines, according to a transmission latency requirement of a URLLC service, a condition for stopping aperiodic channel state information reporting. Specifically, within a latency M after the terminal device receives first data sent by a network device, the terminal device reports aperiodic channel state information, until the latency M elapses, that is, the terminal device no longer performs aperiodic channel state information reporting.

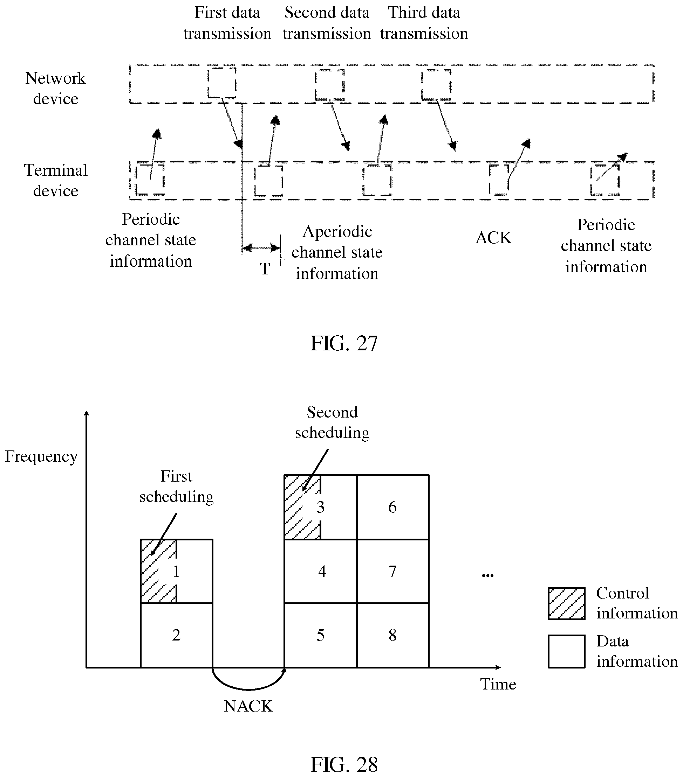

FIG. 27 is a schematic diagram according to still another embodiment of this application. Optionally, as shown in FIG. 27, a terminal device needs to report aperiodic channel state information after receiving data in each transmission and waiting for a time interval T. If the terminal device can correctly decode data in one transmission, the terminal device stops reporting aperiodic channel state information after feeding back ACK information to a network device.

Optionally, in an embodiment of this application, the method further includes: determining that a total size of a time-frequency resource occupied by actual L times of transmission is K time-frequency resource elements, where a size of the time-frequency resource element is a size of a time-frequency resource occupied by first transmission of the K times of transmission, and L is a positive integer; and sending downlink control information to the terminal device, where the downlink control information is used to indicate that a size of a time-frequency resource occupied by each of the L times of transmission is S time-frequency resource elements, 1 ≤ S ≤ K, and S is an integer.

Therefore, after determining K in the foregoing several manners, the network device or the terminal device can properly assign time-frequency resources in the K times of transmission. For example, based on that a target BLER of a URLLC service is 0.001%, it is determined that K = 8, and data is transmitted in the following manners.

It should be understood that to distinguish between one transmission of the K times of transmission and one actual transmission of the actual L times of transmission, one actual transmission of the actual L times of transmission may be referred to as one scheduling in the following.

Manner 1: As shown in FIG. 28, if a non-adaptive hybrid automatic repeat request (hybrid automatic repeat request, HARQ) is used, when K = 8, a size of a time-frequency resource for each of the eight times of transmission remains unchanged. It is determined that the actual quantity L of times of transmission is equal to 2. In this case, a resource used for first scheduling of a sending device (the network device or the terminal device) occupies 2/8 time-frequency resources of total resources, for example, occupies two OFDM symbols and 12 RBs. A control message of the scheduling includes a time-frequency resource occupied by the two times of transmission (that is, includes two time-frequency resource elements). After the first scheduling is completed, the sending device determines, depending on an ACK/NACK fed back by a receive end, whether to perform second scheduling. If the receive end feeds back a NACK, second scheduling is performed, a resource occupied by the second scheduling accounts for 6/8 of the total resources, and a control message of the second scheduling includes a time-frequency resource occupied by six times of transmission (that is, includes six time-frequency resource elements); if the receive end feeds back an ACK, no subsequent transmission is performed.

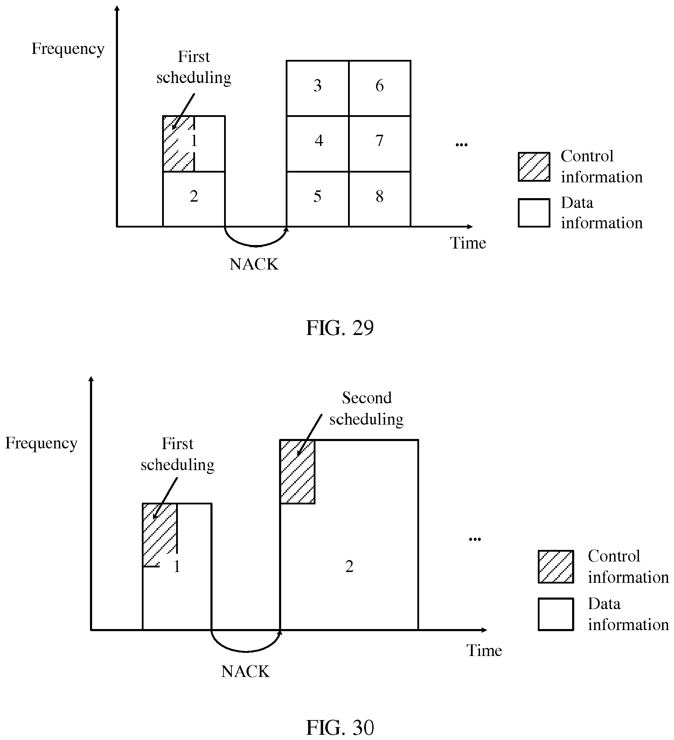

Manner 2: As shown in FIG. 29, if a non-adaptive HARQ is used, when K = 8, a size of a time-frequency resource for each of the eight times of transmission remains unchanged. When L = 1, a sending device performs one scheduling. In this case, the one scheduling of the sending device (the network device or the terminal device) includes first two consecutive times of transmission and last six consecutive times of transmission. There is a specific time interval between the first two times of transmission and the last six times of transmission. Control information of the one scheduling includes a frequency-domain resource occupied by each transmission. After the two times of transmission in the one scheduling are completed, the sending device determines, depending on an ACK/NACK fed back by a receive end, whether to perform the last six times of transmission. If the receive end feeds back a NACK, the sending device continues to perform the last six times of transmission, and the last six times of transmission occupy 6/8 of total resources; if the receive end feeds back an ACK, no subsequent transmission is performed.

Manner 3: As shown in FIG. 30, if an adaptive HARQ is used, when K = 8, a size of a time-frequency resource for each of the eight times of transmission may vary. An actual quantity L of times of transmission of a sending device is equal to 2. For example, a resource used for first scheduling occupies 2/8 time-frequency resources of total resources (that is, includes two time-frequency resource elements). For example, the time-frequency resource occupies two OFDM symbols and 12 RBs. A control message of the scheduling includes a time-frequency resource occupied by the two times of transmission. After the first scheduling is completed, the sending device determines, depending on an ACK/NACK fed back by a receive end, whether to perform second scheduling. If the receive end feeds back a NACK, the sending device performs second scheduling, a resource used for the second scheduling accounts for 6/8 of the total resources (that is, includes six time-frequency resource elements), and a control message of the second scheduling includes a time-frequency resource occupied by six times of transmission; if the receive end feeds back an ACK, no subsequent transmission is performed.

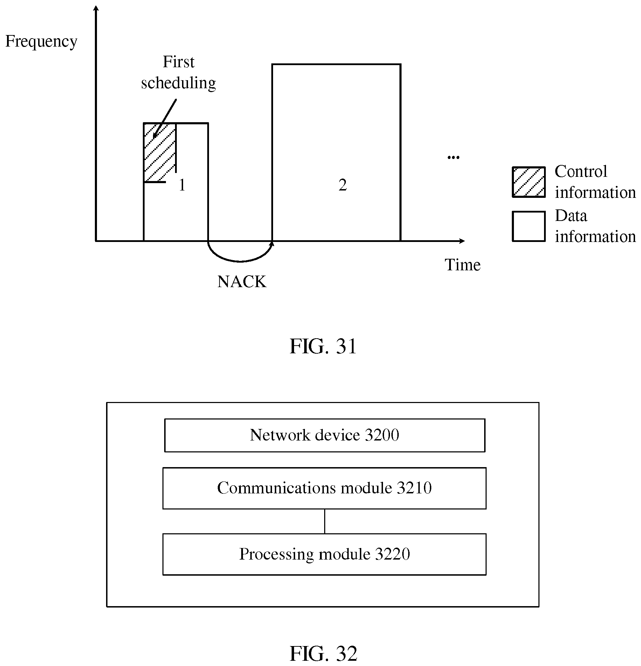

Manner 4: As shown in FIG. 31, if an adaptive HARQ is used, when K = 8, a size of a time-frequency resource for each of the eight times of transmission may vary. An actual quantity L of times of transmission of a sending device is equal to 2. For example, the sending device (the network device or the terminal device) schedules two times of transmission in first scheduling. The first scheduling occupies 2/8 of total resources (that is, includes two time-frequency resource elements). Second scheduling occupies 6/8 of the total resources (that is, includes six time-frequency resource elements). There is a specific time interval between the first scheduling and the second scheduling. Control information of the first scheduling includes a frequency-domain resource occupied by each transmission. After the transmission in the first scheduling is completed, the sending device determines, depending on an ACK/NACK fed back by a receive end, whether to perform the second scheduling. If the receive end feeds back a NACK, the sending device continues to perform the second scheduling, and the second scheduling occupies 6/8 of the total resources; if the receive end feeds back an ACK, no subsequent transmission is performed.

Optionally, the quantity K of times of transmission is determined based on a channel state indicator (channel quality indicator, CQI) of the first transport block. Poorer quality indicated by the CQI indicates a larger value of K, and higher quality indicated by the CQI indicates a smaller value of K.

Optionally, the quantity K of times of transmission is determined based on a latency requirement of a service carried on the first transport block. A lower latency requirement indicates a larger value of K, and a higher latency requirement indicates a larger value of K.

Optionally, the quantity K of times of transmission is determined based on the time interval between the moment of the first transmission of the K times of transmission and the ACK/NACK feedback moment. A shorter time interval between the moment of the first transmission and the ACK/NACK feedback moment indicates a smaller value of K, and a longer time interval between the moment of the first transmission and the ACK/NACK feedback moment indicates a larger value of K.

It should be understood that a manner of determining the quantity K of times of transmission may be a combination of at least two of the foregoing manners. This is not limited in this application.

It should be understood that a specific notification manner for the quantity K of times of transmission may be similar to a specific resource assignment manner. Explicit indication may be performed by using resource indication information or downlink control information, or implicit indication may be performed according to a predefined rule. For brevity, details are not described herein again.

A target BLER value of a URLLC service greatly varies depending on different types of services, and may be 0.1%, 0.001%, or even 0.0000001%. Certainly, there may be various other possible values. In a long term evolution (long term evolution, LTE) system, a CQI table and an MCS table defined based on a target BLER of 10% cannot meet a requirement of the target BLER of the URLLC service. Therefore, in a 5G system, the CQI table and the MCS table in the LTE system may be extended, or a plurality of CQI tables or a plurality of MCS tables may be created, to meet a requirement of the URLLC service for a lower target BLER.

The MCS table predefines all possible modulation and coding schemes, and a CQI index is reported by the terminal device to the network device. To reduce bit overheads of uplink control, a granularity of the CQI table is coarser than that of the MCS table. A specific mapping from a CQI index to an MCS index is determined by the network device. Essentially, both the CQI table and the MCS table correspond to a modulation scheme and a code rate (code rate, CR). Therefore, in this application, the CQI table and the MCS table are not strictly differentiated, and the CQI index and the MCS index are not strictly differentiated. When bit overheads of uplink CQI feedback are included, the bit overheads are specially bit overheads of the CQI table and the CQI index.

In this application, the code rate is a ratio of a quantity of information bits of a TB before channel coding is performed to a quantity of bits mapped to a time-frequency resource of a physical channel after channel coding and rate matching are performed. A lower code rate indicates a higher probability of successful decoding by a receive end, in other words, indicates a lower BLER.

This application provides another possible embodiment. A terminal device determines an adjustment reference value of a scheduling information parameter, where the scheduling information parameter may be at least one of a code rate, a CQI index, an MCS index, a quantity of repetitions of data transmission, a frequency-domain resource size of data transmission, a time-domain resource size of data transmission, and a reliability requirement; the terminal device sends the adjustment reference value of the scheduling information parameter to a network device; and the terminal device further sends the CQI index to the network device. The frequency-domain resource size may be a quantity of RBs. The time-domain resource size may be a quantity of time-domain symbols, a quantity of mini-slots, a quantity of slots, or a quantity of subframes. The reliability requirement may be a target BLER value required after K times of transmission.

Correspondingly, the network device receives the adjustment reference value of the scheduling information parameter and the CQI index from the terminal device; and the network device determines a scheduling result based on a target BLER value of a service, the adjustment reference value of the scheduling information parameter, and the CQI index, where the scheduling result herein may include at least one of a TB size and a time-frequency resource size.

When the scheduling information parameter is the code rate, a corresponding adjustment reference value is related to a first code rate and a second code rate, for example, may be a ratio of the first code rate to the second code rate. The first code rate is a code rate corresponding to a controlled target BLER during data transmission being a first target BLER value. The second code rate is a code rate corresponding to a controlled target BLER during data transmission being a second target BLER value. The adjustment reference value may be alternatively a code rate change slope, that is, obtained by dividing a difference between the first code rate and the second code rate by a difference between the first target BLER value and the second target BLER value. The first target BLER value and the second target BLER value may be values in a linear domain, or may be values in a log domain. The adjustment reference value may be alternatively a difference between code rates, that is, a difference between the first code rate and the second code rate.

Table 9 shows a specific possible implementation. It is assumed that the first target BLER value is 10%, the first code rate is a code rate corresponding to a CQI index of the first target BLER value, the second target BLER value is 0.001%, the second code rate is a code rate corresponding to a CQI index of the second target BLER value, and the ratio of the first code rate to the second code rate is r3, where r3 is a real number greater than or equal to 1. If the second target BLER value is 0.01%, the ratio of the first code rate to the second code rate is r2. If the second target BLER value is 0.1%, the ratio of the first code rate to the second code rate is r1. A code rate and a target BLER value satisfy a specific function relationship, for example, are in a linear relationship. Therefore, a code rate requirement corresponding to any target BLER value may be determined based on the first target BLER value, the first code rate, the second target BLER value, and the second code rate. A correspondence between a CQI index and a code rate corresponding to the first target BLER value may be predefined by a protocol. Therefore, the network device may determine, based on the CQI index and the adjustment reference value of the scheduling information parameter, a code rate that corresponds to each CQI index and that is required for satisfying a third target BLER value. The third target BLER value is a target BLER that needs to be actually achieved for a service. During implementation, when an adjusted code rate is relatively close to a code rate corresponding to the first target BLER value, the code rate corresponding to the first target BLER value may be directly used. For example, when a difference between CR1/r1 and CR0 is less than a threshold, a code rate corresponding to a CQI index 1 when the first target BLER value is 0.1% may be directly set to CR0.

**Table 9**

| **CQI index** | **First target BLER value (10%)** | **Second target BLER value (0.1%**) | **Second target BLER value (0.01%**) | **Second target BLER value (0.001%**) |
|---|---|---|---|---|
| 0 | CR0 | CR0/r1 | CR0/r2 | CR0/r3 |
| 1 | CR1 | CR1/r1 | CR1/r2 | CR1/r3 |
| 2 | CR2 | CR2/r1 | CR2/r2 | CR2/r3 |
| 3 | CR3 | CR3/r1 | CR3/r2 | CR3/r3 |
| 4 | CR4 | CR4/r1 | CR4/r2 | CR4/r3 |
| ... | ... | ... | ... | ... |
| 15 | CR15 | CR15/r1 | CR15/r2 | CR15/r3 |

**Table 10**

| **CQI index** | **First target BLER value (10%)** | **Second target BLER value (0.1%**) | **Second target BLER value (0.01%**) | **Second target BLER value (0.001%**) |
|---|---|---|---|---|
| 0 | QPSK | QPSK | QPSK | QPSK |
| 1 | QPSK | QPSK | QPSK | QPSK |
| 2 | QPSK | QPSK | QPSK | QPSK |
| 3 | QPSK | QPSK | QPSK | QPSK |
| 4 | QPSK | QPSK | QPSK | QPSK |
| 5 | QPSK | QPSK | QPSK | QPSK |
| 6 | QPSK | QPSK | QPSK | QPSK |
| 7 | 16QAM | 16QAM | 16QAM | 16QAM |
| 8 | 16QAM | 16QAM | 16QAM | 16QAM |
| 9 | 16QAM | 16QAM | 16QAM | 16QAM |
| 10 | 16QAM | 16QAM | 16QAM | 16QAM |
| 11 | 64QAM | 64QAM | 64QAM | 64QAM |
| 12 | 64QAM | 64QAM | 64QAM | 64QAM |
| 13 | 64QAM | 64QAM | 64QAM | 64QAM |
| 14 | 64QAM | 64QAM | 64QAM | 64QAM |
| 15 | 64QAM | 64QAM | 64QAM | 64QAM |

As shown in Table 10, for a same CQI index, different target BLER values may be corresponding to a same modulation scheme.

As shown in Table 11, for a same CQI index, different target BLER values may be alternatively corresponding to different modulation schemes. In Table 11, boundaries of different modulation schemes correspond to specific code rates. For example, when a target BLER value is equal to 10%, a boundary code rate of QPSK and 16QAM is CR7. In this case, in a scenario in which the target BLER value is another value, the boundary code rate of QPSK and 16QAM is still CR7.

**Table 11**

| **CQI index** | **First target BLER value (10%)** | **Second target BLER value (0.1%**) | **Second target BLER value (0.01%**) | **Second target BLER value (0.001%**) |
|---|---|---|---|---|
| 0 | QPSK | QPSK | QPSK | QPSK |
| 1 | QPSK | QPSK | QPSK | QPSK |
| 2 | QPSK | QPSK | QPSK | QPSK |
| 3 | QPSK | QPSK | QPSK | QPSK |
| 4 | QPSK | QPSK | QPSK | QPSK |
| 5 | QPSK | QPSK | QPSK | QPSK |
| 6 | QPSK | QPSK | QPSK | QPSK |
| 7 | 16QAM | QPSK | QPSK | QPSK |
| 8 | 16QAM | 16QAM | QPSK | QPSK |
| 9 | 16QAM | 16QAM | 16QAM | QPSK |
| 10 | 16QAM | 16QAM | 16QAM | 16QAM |
| 11 | 64QAM | 16QAM | 16QAM | 16QAM |
| 12 | 64QAM | 64QAM | 16QAM | 16QAM |
| 13 | 64QAM | 64QAM | 64QAM | 16QAM |
| 14 | 64QAM | 64QAM | 64QAM | 64QAM |
| 15 | 64QAM | 64QAM | 64QAM | 64QAM |

When the scheduling information parameter is the quantity of times of transmission, a corresponding adjustment reference value is related to a first quantity of times of transmission and a second quantity of times of transmission, for example, may be a ratio of the first quantity of times of transmission to the second quantity of times of transmission. The first quantity of times of transmission is a quantity of times of transmission corresponding to a controlled target BLER during data transmission being a first target BLER value. The second quantity of times of transmission is a quantity of times of transmission corresponding to a controlled target BLER during data transmission being a second target BLER value. The adjustment reference value may be alternatively a change slope of the quantity of times of transmission, that is, obtained by dividing a difference between the first quantity of times of transmission and the second quantity of times of transmission by a difference between the first target BLER value and the second target BLER value. The first target BLER value and the second target BLER value may be values in a linear domain, or may be values in a log domain. The adjustment reference value may be alternatively a difference between quantities of times of transmission, that is, a difference between the first quantity of times of transmission and the second quantity of times of transmission. A quantity of times of transmission and a target BLER value satisfy a specific function relationship, for example, are in a linear relationship. Therefore, a requirement, corresponding to any target BLER value, for a quantity of times of transmission may be determined based on the first target BLER value, the first quantity of times of transmission, the second target BLER value, and the second quantity of times of transmission. A correspondence between a CQI index and a quantity of times of transmission that corresponds to the first target BLER value may be predefined or preconfigured. Therefore, the network device may determine, based on the CQI index and the adjustment reference value of the scheduling information parameter, a quantity of times of transmission that corresponds to each CQI index and that is required for satisfying a third target BLER value. The third target BLER value is a target BLER that needs to be actually achieved for a service.

When the scheduling information parameter is the time-frequency resource size, a corresponding adjustment reference value is related to a first time-frequency resource size and a second time-frequency resource size, for example, may be a ratio of the first time-frequency resource size to the second time-frequency resource size. The first time-frequency resource size is a time-frequency resource size corresponding to a controlled target BLER during data transmission being a first target BLER value. The second time-frequency resource size is a time-frequency resource size corresponding to a controlled target BLER during data transmission being a second target BLER value. The adjustment reference value may be alternatively a change slope of the time-frequency resource size, that is, obtained by dividing a difference between the first time-frequency resource size and the second time-frequency resource size by a difference between the first target BLER value and the second target BLER value. The first target BLER value and the second target BLER value may be values in a linear domain, or may be values in a log domain. The adjustment reference value may be alternatively a difference between time-frequency resource sizes, that is, a difference between the first time-frequency resource size and the second time-frequency resource size. Herein, the time-frequency resource size may be a time-domain resource size, or may be a frequency-domain resource size, or may be a sum of a time-domain resource and a frequency-domain resource. A time-frequency resource size and a target BLER value satisfy a specific function relationship, for example, are in a linear relationship. Therefore, a requirement, corresponding to any target BLER value, for the time-frequency resource size may be determined based on the first target BLER value, the first time-frequency resource size, the second target BLER value, and the second time-frequency resource size. A correspondence between a CQI index and a time-frequency resource size that corresponds to the first target BLER value may be predefined or preconfigured. Therefore, the network device may determine, based on the CQI index and the adjustment reference value of the scheduling information parameter, a time-frequency resource size that corresponds to each CQI index and that is required for satisfying a third target BLER value. The third target BLER value is a target BLER that needs to be actually achieved for a service.

When the scheduling information parameter is the CQI index, a corresponding adjustment reference value may be alternatively a CQI index variation, that is, a CQI index variation of a CQI index corresponding to the second target BLER value relative to a CQI index corresponding to the first target BLER value. Herein, the CQI index corresponding to the first target BLER value is referred to as a first CQI index, and the CQI index corresponding to the second target BLER value is referred to as a second CQI index. A CQI index and a target BLER value satisfy a specific function relationship, for example, are in a linear relationship. Therefore, a CQI index corresponding to any target BLER value may be determined based on the first target BLER value, the first CQI index, the second target BLER value, and the second CQI index.

When the scheduling information parameter is the MCS index, a corresponding adjustment reference value may be alternatively an MCS index variation, which is similar to the CQI index variation. Details are not described herein again.

The adjustment reference value of the scheduling information parameter may be one value, or may be a group of values corresponding to a CQI index. For example, CQI indexes 0 to 3 correspond to V1, CQI indexes 4 to 7 correspond to V2, CQI indexes 8 to 11 correspond to V3, and CQI indexes 12 to 15 correspond to V4. In an extreme case, one CQI index may correspond to one adjustment reference value. A value range of the CQI index herein is 0-15. However, the value range of the CQI index is not limited in this application.

The terminal device may send an adjustment reference value of one scheduling information parameter to the network device, or may send adjustment reference values of a plurality of scheduling information parameters to the network device. The adjustment reference value sent by the terminal device to the network device may be a quantized value of the adjustment reference value, or may be an index of the adjustment reference value. The terminal device may send the adjustment reference value to the network device by using RRC signaling, MAC layer signaling, or physical layer signaling.

The terminal device may determine the adjustment reference value of the scheduling information parameter based on at least one of the following factors: a demodulation and decoding capability of the terminal device, a channel type of a channel in which the terminal device is located, a moving speed of the terminal device, and a frame format parameter of a radio frame carrying service data.

In the foregoing embodiment, the terminal sends the adjustment reference value of the scheduling information parameter to the network device by using the signaling. Therefore, after obtaining the CQI index that is based on the first target BLER value (for example, 10%) and that is reported by the terminal device, the network device may determine TB sizes of data transmission that correspond to different target BLER values. This prevents the terminal device from reporting CQI indexes of different target BLER values and reduces control signaling overheads.

This application further provides a possible embodiment. A terminal device obtains a complete scheduling information table, for example, a CQI table shown in Table 12, where the table may be predefined by a system, or may be determined by the terminal device and a network device through negotiation by using RRC signaling; and the terminal device sends first indication information to the network device by using RRC signaling, where the first indication information is used to indicate at least one abbreviated scheduling information table. The abbreviated scheduling information table is shown in Table 13. The table is a subset of the complete scheduling information table. The scheduling information table herein may be a CQI table or an MCS table. When the scheduling information table is a CQI table, the terminal device and the network device agree on an abbreviated CQI table, so that bit overheads of uplink CQI reporting can be reduced; or when the scheduling information table is an MCS table, the terminal device and the network device agree on an abbreviated MCS table, so that bit overheads of an MCS field in DCI can be reduced. The terminal device sends a plurality of abbreviated scheduling information tables to support a multi-service requirement scenario. When a terminal device has a plurality of concurrent services with different requirements for target BLER values, the terminal device may send, to the network device, an abbreviated CQI table matching target BLER values of the plurality of services.

Specifically, the terminal device may determine the abbreviated scheduling information table based on at least one of the following factors: a requirement of a service for a target BLER value, a demodulation and decoding capability of the terminal device, a channel type of a channel in which the terminal device is located, a moving speed of the terminal device, and a frame format parameter of a radio frame carrying service data.

**Table 12**

| **CQI index** | **Code rate** | **Modulation scheme** |
|---|---|---|
| 0 | CR0 | BPSK |
| 1 | CR1 | BPSK |
| 2 | CR2 | BPSK |
| 3 | CR3 | QPSK |
| 4 | CR4 | QPSK |
| 5 | CR5 | QPSK |
| 6 | CR6 | QPSK |
| 7 | CR7 | QPSK |
| 8 | CR8 | QPSK |
| 9 | CR9 | QPSK |
| 10 | CR10 | QPSK |
| 11 | CR11 | QPSK |
| 12 | CR12 | QPSK |
| 13 | CR13 | QPSK |
| 14 | CR14 | 16QAM |
| 15 | CR15 | 16QAM |
| 16 | CR16 | 16QAM |
| 17 | CR17 | 16QAM |
| 18 | CR18 | 16QAM |
| 19 | CR19 | 16QAM |
| 20 | CR20 | 16QAM |
| 21 | CR21 | 64QAM |
| 22 | CR22 | 64QAM |
| 23 | CR23 | 64QAM |
| 24 | CR24 | 64QAM |
| 25 | CR25 | 64QAM |
| 26 | CR26 | 64QAM |
| 27 | CR27 | 256QAM |
| 28 | CR28 | 256QAM |
| 29 | CR29 | 256QAM |
| 30 | CR30 | 256QAM |
| 31 | CR31 | 256QAM |

**Table 13**

| **CQI index** | **Code rate** | **Modulation scheme** |
|---|---|---|
| 0 | CR3 | QPSK |
| 1 | CR4 | QPSK |
| 2 | CR5 | QPSK |
| 3 | CR6 | QPSK |
| 4 | CR7 | QPSK |
| 5 | CR8 | QPSK |
| 6 | CR9 | QPSK |
| 7 | CR10 | QPSK |
| 8 | CR11 | QPSK |
| 9 | CR12 | QPSK |
| 10 | CR13 | QPSK |
| 11 | CR14 | 16QAM |
| 12 | CR15 | 16QAM |
| 13 | CR16 | 16QAM |
| 14 | CR17 | 16QAM |
| 15 | CR18 | 16QAM |

Specifically, content of the abbreviated scheduling information table sent by the terminal device may include a CQI index value included in the complete scheduling information table. As shown in Table 13, the abbreviated scheduling information table corresponds to content corresponding to CQI indexes 3 to 18 in the complete scheduling information table shown in Table 12. In this case, the terminal device may send each specific CQI index value of the CQI indexes 3 to 18 to the network device, or may send a start number and an end number of the CQI indexes to the network device.

Sending of the first indication information may be event-triggered. For example, the first indication information is sent when the terminal device accesses a network, or the sending is triggered when a service type changes in a process in which the terminal device communicates with the network device. Alternatively, the first indication information may be periodically sent.

Further, the terminal device receives DCI on a physical downlink control channel. The DCI carries scheduling information sent by the network device to the terminal device. The scheduling information is determined based on the abbreviated scheduling information table.

Corresponding to that of the terminal device, a processing procedure of the network device is as follows: The network device receives the first indication information, where the first indication information is used to indicate the at least one abbreviated scheduling information table; the network device obtains the complete scheduling information table, where the table may be predefined by the system, or may be determined by the terminal device and the network device through negotiation by using the RRC signaling; and the network device determines the abbreviated scheduling information table based on the first indication information and the complete scheduling information table. Further, the network device schedules, based on the abbreviated scheduling information table, data to be sent to the terminal device; determines DCI based on a scheduling result; and makes the DCI borne on a physical downlink control channel and sent to the terminal device.

This application further provides a possible embodiment. A terminal device determines M scheduling information tables from N scheduling information tables, where the N scheduling information tables respectively correspond to N different requirements for target BLER values, N is an integer greater than 1, and M is a positive integer; and the terminal device sends second indication information, where the second indication information is used to indicate the M scheduling information tables.

Specifically, the terminal device may determine the M scheduling information tables from the N scheduling information tables according to a requirement of a current service of the terminal device for a target BLER value. For example, a service included in current communication between the terminal device and the network device requires a target BLER value of 0.01%. In this case, the terminal device may select a scheduling information table corresponding to the target BLER value of 0.01%. When the terminal device and the network device perform multi-service communication, a plurality of scheduling information tables may be selected to match different requirements of a plurality of services for target BLER values.

The second indication information may be an index or a number of each of the M scheduling information tables in the N scheduling information tables.

The second indication information may be sent by using RRC signaling, MAC layer signaling, or physical layer signaling. Sending of the second indication information may be event-triggered, or the second indication information may be periodically sent.

According to the foregoing method, a CQI reported by the terminal can match an actual requirement for a target BLER value, to reduce control signaling overheads, for example, reduce bit overheads of an uplink CQI.

Corresponding to that of the terminal device, a processing procedure on a network side is as follows: receiving the second indication information, where the second indication information is used to indicate the M scheduling information tables in the N scheduling information tables, the N scheduling information tables respectively correspond to N different requirements for target BLER values, N is an integer greater than 1, and M is a positive integer; and determining the M scheduling information tables in the N scheduling information tables based on the second indication information.

The foregoing describes the solutions in the embodiments of this application from a perspective of a method with reference to FIG. 3 to FIG. 31. The following describes apparatuses in the embodiments of this application with reference to FIG. 32 to FIG. 37.

FIG. 32 is a schematic structural block diagram of a network device 3200 according to an embodiment of the present invention. It should be understood that the network device 3200 can perform the steps that are performed by the network device in the foregoing method embodiments (including the method embodiments of FIG. 3 to FIG. 31). To avoid repetition, details are not described herein again. The network device 3200 includes:
a communications module 3210, configured to send downlink control information, where the downlink control information is used to indicate K times of transmission of a first transport block, 1 < i ≤ K, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and
a processing module 3220, configured to transmit the first transport block for K times based on the downlink control information.

It should be understood that the action performed by the processing module 3220 may be implemented by a processor, and the action performed by the communications module 3210 may be implemented by a transceiver under control of the processor.

For a technical effect that can be achieved in this embodiment, refer to the foregoing descriptions. Details are not described herein again.

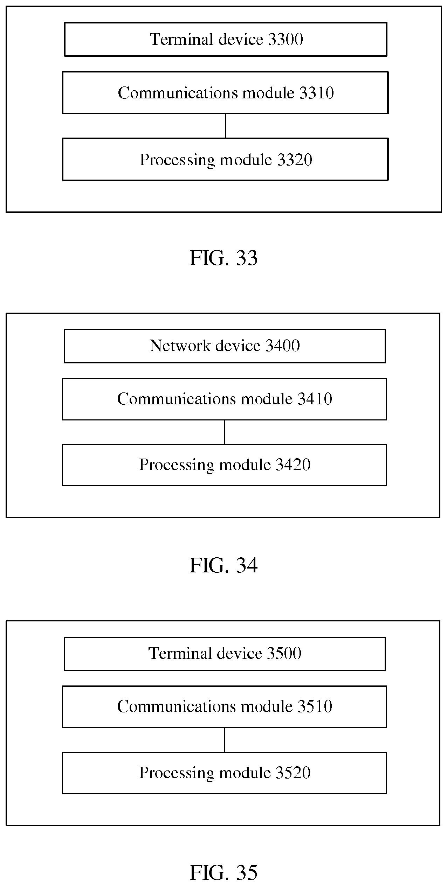

FIG. 33 is a schematic structural block diagram of a terminal device 3300 according to an embodiment of the present invention. It should be understood that the terminal device 3300 can perform the steps that are performed by the terminal device in the foregoing method embodiments (including the method embodiments of FIG. 3 to FIG. 31). To avoid repetition, details are not described herein again. The terminal device 3300 includes:
a communications module 3310, configured to receive downlink control information, where the downlink control information is used to indicate K times of transmission of a first transport block, 1 < i ≤ K, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and
a processing module 3320, configured to receive data, transmitted in the K times of transmission, of the first transport block based on the downlink control information.

It should be understood that the action performed by the processing module 3320 may be implemented by a processor, and the action performed by the communications module 3310 may be implemented by a transceiver under control of the processor.

For a technical effect that can be achieved in this embodiment, refer to the foregoing descriptions. Details are not described herein again.

FIG. 34 is a schematic structural block diagram of a network device 3400 according to an embodiment of the present invention. It should be understood that the network device 3400 can perform the steps that are performed by the network device in the foregoing method embodiments (including the method embodiments of FIG. 3 to FIG. 31). To avoid repetition, details are not described herein again. The network device 3400 includes:
a communications module 3410, configured to receive a notification message sent by a terminal device, where the notification message includes a reference value N for a quantity of times of transmission required when service data reaches a reference residual block error rate; and
a processing module 3420, configured to determine a quantity K of times of transmission based on the reference value N and at least one of the following: a target residual block error rate of the service data carried in a first transport block, a modulation and coding scheme for the first transport block, a status of a channel in which the terminal device is located, a latency requirement of the service data carried in the first transport block, and a time interval between a moment of the first transmission of the K times of transmission and an acknowledgement ACK/negative acknowledgement NACK feedback moment, where N and K are positive integers.

It should be understood that the action performed by the processing module 3420 may be implemented by a processor, and the action performed by the communications module 3410 may be implemented by a transceiver under control of the processor.

For a technical effect that can be achieved in this embodiment, refer to the foregoing descriptions. Details are not described herein again.

FIG. 35 is a schematic structural block diagram of a terminal device 3500 according to an embodiment of the present invention. It should be understood that the terminal device 3500 can perform the steps that are performed by the terminal device in the foregoing method embodiments (including the method embodiments of FIG. 3 to FIG. 31). To avoid repetition, details are not described herein again. The terminal device 3500 includes:
a communications module 3510, configured to determine a reference value N for a quantity of times of transmission required when service data reaches a reference residual block error rate; and
a processing module 3520, configured to send the reference value N for the quantity of times of transmission to a network device, where N is a positive integer.

It should be understood that the action performed by the processing module 3520 may be implemented by a processor, and the action performed by the communications module 3510 may be implemented by a transceiver under control of the processor.

For a technical effect that can be achieved in this embodiment, refer to the foregoing descriptions. Details are not described herein again.

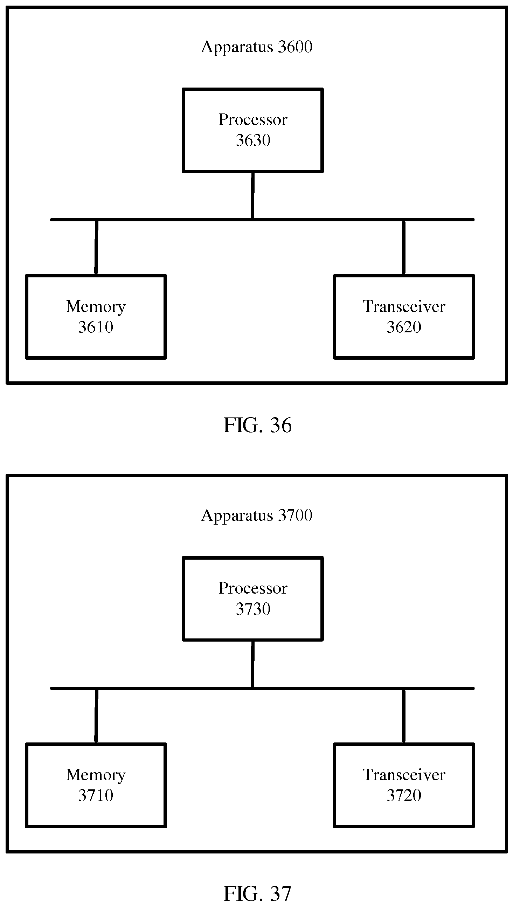

FIG. 36 is a schematic structural block diagram of an apparatus according to an embodiment of the present invention. FIG. 36 shows the apparatus 3600 provided in this embodiment of the present invention. It should be understood that the apparatus 3600 can perform the steps that are performed by the network device in the foregoing method embodiments (including the method embodiments of FIG. 3 to FIG. 31). To avoid repetition, details are not described herein again. The apparatus 3600 includes:
a memory 3610, configured to store a program;
a transceiver 3620, configured to communicate with another device; and
a processor 3630, configured to execute the program in the memory 3610, where the processor 3630 is separately connected to the memory 3610 and the transceiver 3620, and is configured to execute an instruction stored in the memory 3610, so as to: when executing the instruction, perform the method that is performed by the network device in the foregoing embodiments.

It should be understood that the apparatus 3600 may be specifically the network device in the foregoing embodiments, and may be configured to perform the steps and/or procedures corresponding to the network device in the foregoing method embodiments.

For a technical effect that can be achieved in this embodiment, refer to the foregoing descriptions. Details are not described herein again.

FIG. 37 is a schematic structural block diagram of an apparatus according to an embodiment of the present invention. FIG. 37 shows the apparatus 3700 provided in this embodiment of the present invention. It should be understood that the apparatus 3700 can perform the steps that are performed by the terminal device in the foregoing method embodiments (including the method embodiments of FIG. 3 to FIG. 31). To avoid repetition, details are not described herein again. The apparatus 3700 includes:
a memory 3710, configured to store a program;
a transceiver 3720, configured to communicate with another device; and
a processor 3730, configured to execute the program in the memory 3710, where the processor 3730 is separately connected to the memory 3710 and the transceiver 3720, and is configured to execute an instruction stored in the memory 3710, so as to: when executing the instruction, perform the method that is performed by the terminal device in the foregoing embodiments.

It should be understood that the apparatus 3700 may be specifically the terminal device in the foregoing embodiments, and may be configured to perform the steps and/or procedures corresponding to the terminal device in the foregoing method embodiments.

For a technical effect that can be achieved in this embodiment, refer to the foregoing descriptions. Details are not described herein again.

It can be understood that when the embodiments of this application are applied to a chip of a network device (non-claimed embodiment), the chip of the network device implements the functions of the network device in the foregoing method embodiments. The chip of the network device sends first information to another module (for example, a radio frequency module or an antenna) in the network device, and receives second information from the another module in the network device. The first information is sent by the another module of the network device to a terminal device, and the second information is sent by the terminal device to the network device. When the embodiments of this application are applied to a chip of a terminal device, the chip of the terminal device implements the functions of the terminal device in the foregoing method embodiments. The chip of the terminal device receives first information from another module (for example, a radio frequency module or an antenna) in the terminal device, and sends second information to the another module in the terminal device. The first information is sent by a network device to the terminal device, and the second information is sent to the network device. The first information and the second information herein are not a particular type of information, but are merely used to indicate a communication mode between the chip and the another module.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It can be clearly understood by a person skilled in the art that, for convenience and brevity of description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device to perform all or some of the steps of the methods described in the embodiments of the present invention. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Therefore, the protection scope of the present invention shall be subject to the protection scope of the claims.

## Claims

1. A communication method, comprising:
sending (310) downlink control information, wherein the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and
transmitting (320) the first transport block for K times based on the downlink control information.

2. The method according to claim 1, wherein the method further comprises:
sending resource indication information, wherein the resource indication information is used to indicate at least one of the following:
a frequency-domain resource occupied by the K times of transmission; and
a time-domain resource occupied by the K times of transmission.

3. The method according to claim 1, wherein the downlink control information is further used to indicate at least one of the following:
a frequency-domain resource occupied by the K times of transmission; and
a time-domain resource occupied by the K times of transmission.

4. The method according to any one of claims 1 to 3, wherein a quantity of time-frequency resources occupied by last M times of transmission of the K times of transmission is greater than a quantity of time-frequency resources occupied by first transmission, 1 ≤ M < K, and M is an integer.

5. A communication method, comprising:
receiving downlink control information, wherein the downlink control information is used to indicate K times of transmission of a first transport block, K is an integer greater than 1, and the K times of transmission meet at least one of the following conditions: sizes of frequency-domain resources occupied by at least two times of transmission during the K times of transmission are different, and sizes of time-domain resources occupied by at least two times of transmission during the K times of transmission are different; and
receiving data, transmitted in the K times of transmission, of the first transport block based on the downlink control information.

6. The method according to claim 5, wherein the method further comprises:
determining, based on the downlink control information, a time-frequency resource occupied by the K times of transmission.

7. The method according to claim 5, wherein the method further comprises:
receiving resource indication information, and determining, based on the resource indication information, a time-frequency resource occupied by the K times of transmission.

8. The method according to any one of claims 5 to 7, wherein a quantity of time-frequency resources of last M times of transmission of the K times of transmission is greater than a quantity of time-frequency resources of the first transmission, 1 ≤ M < K, and M is an integer.

9. A communication apparatus, wherein the apparatus comprises means adapted to perform the method according to any one of claims 1 to 4.

10. A network device (3200), comprising a communication apparatus according to claim 9.

11. A communication apparatus, wherein the apparatus comprises means adapted to perform the method according to any one of claims 5 to 8.

12. A terminal device (3300), comprising a communication apparatus according to claim 11.

13. A communication system, comprising a network device according to claim 10 and a terminal device according to claim 12.

14. A computer readable storage medium, wherein the computer readable storage medium stores a computer program or an instruction, and when the computer program or the instruction is run, the method according to any one of claims 1 to 4 or claims 5 to 8 is implemented.

15. A computer program product, wherein the computer program product comprises a computer program or an instruction, and when the computer program or the instruction is run, the method according to any one of claims 1 to 4 or claims 5 to 8 is implemented.

## Patentansprüche

1. Kommunikationsverfahren, das Folgendes umfasst:
Senden (310) von Downlink-Steuerinformationen, wobei die Downlink-Steuerinformationen verwendet werden, um K-Übertragungszeiten eines ersten Transportblocks anzuzeigen, wobei K eine ganze Zahl größer als 1 ist und die K-Übertragungszeiten die folgenden Bedingungen erfüllen: Umfänge von Frequenzbereichsressourcen, die während der K-Übertragungszeiten mit wenigstens zwei Übertragungszeiten belegt werden, sind unterschiedlich, und/oder Umfänge von Zeitbereichsressourcen, die während der K-Übertragungszeiten mit wenigstens zwei Übertragungszeiten belegt werden, sind unterschiedlich; und
Übertragen (320) des ersten Transportblocks für K-Zeiten basierend auf den Downlink-Steuerinformationen.

2. Verfahren nach Anspruch 1, wobei das Verfahren ferner Folgendes umfasst:
Senden von Ressourcenanzeigeinformationen, wobei die Ressourcenanzeigeinformationen verwendet werden, um Folgendes anzuzeigen:
eine Frequenzbereichsressource, die mit den K-Übertragungszeiten belegt wird; und/oder
eine Zeitbereichsressource, die mit den K-Übertragungszeiten belegt wird.

3. Verfahren nach Anspruch 1, wobei die Downlink-Steuerinformationen ferner verwendet werden, um Folgendes anzuzeigen:
eine Frequenzbereichsressource, die mit den K-Übertragungszeiten belegt wird; und/oder
eine Zeitbereichsressource, die mit den K-Übertragungszeiten belegt wird.

4. Verfahren nach einem der Ansprüche 1 bis 3, wobei eine Menge von Zeitfrequenzressourcen, die mit den letzten M-Übertragungszeiten der K-Übertragungszeiten belegt wurden, größer ist als eine Menge von Zeitfrequenzressourcen, die mit der ersten Übertragung belegt werden, wobei 1 ≤ M < K, und M eine ganze Zahl ist.

5. Kommunikationsverfahren, das Folgendes umfasst:
Empfangen von Downlink-Steuerinformationen, wobei die Downlink-Steuerinformationen verwendet werden, um K-Übertragungszeiten eines ersten Transportblocks anzuzeigen, wobei K eine ganze Zahl größer als 1 ist und die K-Übertragungszeiten die folgenden Bedingungen erfüllen: Umfänge von Frequenzbereichsressourcen, die während der K-Übertragungszeiten mit wenigstens zwei Übertragungszeiten belegt werden, sind unterschiedlich, und/oder Umfänge von Zeitbereichsressourcen, die während der K-Übertragungszeiten mit wenigstens zwei Übertragungszeiten belegt werden, sind unterschiedlich; und
Empfangen von Daten, die in den K-Übertragungszeiten des ersten Transportblocks basierend auf den Downlink-Steuerinformationen übertragen werden.

6. Verfahren nach Anspruch 5, wobei das Verfahren ferner Folgendes umfasst:
Bestimmen, basierend auf den Downlink-Steuerinformationen, einer Zeitfrequenzressource, die mit den K-Übertragungszeiten belegt wird.

7. Verfahren nach Anspruch 5, wobei das Verfahren ferner Folgendes umfasst:
Empfangen von Ressourcenanzeigeinformationen und Bestimmen, basierend auf den Ressourcenanzeigeinformationen, einer Zeitfrequenzressource, die mit den K-Übertragungszeiten belegt wird.

8. Verfahren nach einem der Ansprüche 5 bis 7, wobei eine Menge von Zeitfrequenzressourcen der letzten M-Übertragungszeiten der K-Übertragungszeiten größer ist als eine Menge von Zeitfrequenzressourcen der ersten Übertragung, wobei 1 ≤ M < K, und M eine ganze Zahl ist.

9. Kommunikationseinrichtung, wobei die Einrichtung Mittel umfasst, die angepasst sind, um das Verfahren nach einem der Ansprüche 1 bis 4 durchzuführen.

10. Netzwerkvorrichtung (3200), die eine Kommunikationseinrichtung nach Anspruch 9 umfasst.

11. Kommunikationseinrichtung, wobei die Einrichtung Mittel umfasst, die angepasst sind, um das Verfahren nach einem der Ansprüche 5 bis 8 durchzuführen.

12. Endgerät (3300), das eine Kommunikationseinrichtung nach Anspruch 11 umfasst.

13. Kommunikationssystem, das eine Netzwerkvorrichtung nach Anspruch 10 und ein Endgerät nach Anspruch 12 umfasst.

14. Computerlesbares Speichermedium, wobei das computerlesbare Speichermedium ein Computerprogramm oder eine Anweisung speichert und wenn das Computerprogramm ablaufen gelassen wird, das Verfahren nach einem der Ansprüche 1 bis 4 oder der Ansprüche 5 bis 8 implementiert wird.

15. Computerprogrammprodukt, wobei das Computerprogrammprodukt ein Computerprogramm oder eine Anweisung umfasst und wenn das Computerprogramm oder die Anweisung ablaufen gelassen wird, das Verfahren nach einem der Ansprüche 1 bis 4 oder der Ansprüche 5 bis 8 implementiert wird.

## Revendications

1. Procédé de communication, comprenant :
l'envoi (310) d'informations de commande de liaison descendante, dans lequel les informations de commande de liaison descendante sont utilisées pour indiquer K temps de transmission d'un premier bloc de transport, K est un entier supérieur à 1 et les K temps de transmission satifont au moins l'une des conditions suivantes : les tailles des ressources de domaine fréquentiel occupées par au moins deux temps de transmission pendant les K temps de transmission sont différentes, et les tailles des ressources de domaine temporel occupées par au moins deux temps de transmission pendant les K temps de transmission sont différentes ; et
la transmission (320) du premier bloc de transport pendant K temps sur la base des informations de commande de liaison descendante.

2. Procédé selon la revendication 1, dans lequel le procédé comprend en outre :
l'envoi d'informations d'indication de ressource, les informations d'indication de ressource étant utilisées pour indiquer au moins l'un des éléments suivants :
une ressource de domaine fréquentiel occupée par les K temps de transmission ; et
une ressource du domaine temporel occupée par les K temps de transmission.

3. Procédé selon la revendication 1, dans lequel les informations de commande de liaison descendante sont en outre utilisées pour indiquer au moins l'un des éléments suivants :
une ressource de domaine fréquentiel occupée par les K temps de transmission ; et
une ressource du domaine temporel occupée par les K temps de transmission.

4. Procédé selon l'une quelconque des revendications 1 à 3, dans lequel une quantité de ressources temps-fréquence occupée par les M derniers temps de transmission des K temps de transmission est supérieure à une quantité de ressources temps-fréquence occupées par la première transmission, 1 ≤ M < K et M est un entier.

5. Procédé de communication, comprenant :
la réception d'informations de commande de liaison descendante, dans lequel les informations de commande de liaison descendante sont utilisées pour indiquer K temps de transmission d'un premier bloc de transport, K est un entier supérieur à 1 et les K temps de transmission satisfont au moins l'une des conditions suivantes : les tailles de ressources de domaine fréquentiel occupées par au moins deux temps de transmission pendant les K temps de transmission sont différentes, et les tailles des ressources de domaine temporel occupées par au moins deux temps de transmission pendant les K temps de transmission sont différentes ; et
la réception de données, transmises aux K temps de transmission, du premier bloc de transport sur la base des informations de commande de liaison descendante.

6. Procédé selon la revendication 5, dans lequel le procédé comprend en outre :
la détermination, sur la base des informations de commande de liaison descendante, d'une ressource temps-fréquence occupée par les K temps de transmission.

7. Procédé selon la revendication 5, le procédé comprenant en outre :
la réception d'informations d'indication de ressources, et la détermination, sur la base des informations d'indication de ressources, d'une ressource temps-fréquence occupée par les K temps de transmission.

8. Procédé selon l'une quelconque des revendications 5 à 7, dans lequel une quantité de ressources temps-fréquence des M derniers temps de transmission des K temps de transmission est supérieure à une quantité de ressources temps-fréquence de la première transmission, 1 ≤ M < K et M est un entier.

9. Appareil de communication, dans lequel l'appareil comprend un moyen pour effectuer le procédé selon l'une quelconque des revendications 1 à 4.

10. Dispositif de réseau (3200), comprenant un appareil de communication selon la revendication 9.

11. Appareil de communication, dans lequel l'appareil comprend un moyen pour effectuer le procédé selon l'une quelconque des revendications 5 à 8.

12. Dispositif terminal (3300), comprenant un appareil de communication selon la revendication 11.

13. Système de communication comprenant un dispositif réseau selon la revendication 10 et un dispositif terminal selon la revendication 12.

14. Support de stockage lisible par ordinateur, le support de stockage lisible par ordinateur étant configuré pour stocker un programme informatique ou une instruction, et lorsque le programme informatique ou l'instruction est exécuté, le procédé selon l'une quelconque des revendications 1 à 4 ou des revendication 5 à 8 est mis en œuvre.

15. Produit-programme informatique, le produit-programme informatique comprenant un programme informatique ou une instruction, et lorsque le programme informatique ou l'instruction est exécuté, le procédé selon l'une quelconque des revendications 1 à 4 ou des revendications 5 à 8 est mis en œuvre.
